(19) Europäisches Patentamt
European Patent Office
Office européen des brevets

(11) **EP 4 694 362 A1**

(12) **EUROPEAN PATENT APPLICATION**
published in accordance with Art. 153(4) EPC

(43) Date of publication:
**11.02.2026 Bulletin 2026/07**

(21) Application number: **23931598.9**

(22) Date of filing: **07.04.2023**

(51) International Patent Classification (IPC):
***H04W 52/00*** (2009.01)

(52) Cooperative Patent Classification (CPC):
**H04W 52/00**

(86) International application number:
**PCT/CN2023/087158**

(87) International publication number:
**WO 2024/207539 (10.10.2024 Gazette 2024/41)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Beijing Xiaomi Mobile Software Co.,
Ltd.
Beijing 100085 (CN)**

(72) Inventor: **LUO, Xingyi
Beijing 100085 (CN)**

(74) Representative: **Hersina, Günter et al
Schoppe, Zimmermann, Stöckeler
Zinkler, Schenk & Partner mbB
Patentanwälte
Radlkoferstrasse 2
81373 München (DE)**

(54) **POWER CONTROL METHOD AND APPARATUS, AND STORAGE MEDIUM**

(57)     The present invention relates to a method for controlling power and apparatus, and a storage medium. The method comprises: receiving first information (S3401), the first information being used for determining at least two sounding reference signals (SRSs) or at least two SRS sets for bandwidth aggregation for positioning measurement; and sending each SRS or each SRS set of the at least two SRSs or the at least two SRS sets (S3402), the transmission power of each SRS or each SRS set being first transmission power. SRSs or SRS sets requiring the bandwidth aggregation are determined by means of the first information, and each SRS or each SRS set of the SRSs or the SRS sets requiring the bandwidth aggregation is sent at the first transmission power, so that the SRSs or the SRS sets can be transmitted at proper transmission power, thereby improving the accuracy of the positioning measurement.

S3401 : receiving first information

S3402 : sending each of the at least two SRSs or each of
the at least two SRS sets

Fig.3d

**Description**

**FIELD**

The present invention relates to the field of communication technologies, and in particular to a method for controlling power, an apparatus for controlling power, and a storage medium.

**BACKGROUND**

When a network device needs to perform positioning measurement on a terminal, the network device can perform positioning measurement based on an uplink reference signal sent by the terminal.

**SUMMARY**

The present invention provides a method for controlling power, an apparatus for controlling power, and a storage medium.

According to embodiments of a first aspect of the present invention, a method for controlling power is provided, performed by a terminal, where the method includes: receiving first information, where the first information is used to determine at least two sounding reference signals (SRSs) or at least two SRS sets for bandwidth aggregation for positioning measurement; and sending each of the at least two SRSs or each of the at least two SRS sets, where a transmission power of each SRS or each SRS set is a first transmission power.

According to embodiments of a second aspect of the present invention, a method for controlling power is provided, performed by a network device, where the method includes: sending first information, where the first information is used to indicate at least two sounding reference signals (SRSs) or at least two SRS sets for bandwidth aggregation for positioning measurement; and receiving each of the at least two SRSs or each of the at least two SRS sets, where a transmission power of each SRS or each SRS set is a first transmission power.

According to embodiments of a third aspect of the present invention, a method for controlling power is provided, for a communication system, where the method includes: a network device sending first information to a terminal, where the first information is used to indicate at least two sounding reference signals (SRSs) or at least two SRS sets for bandwidth aggregation for positioning measurement; and the terminal sending each of the at least two SRSs or each of the at least two SRS sets to the network device, where a transmission power of each SRS or each SRS set is a first transmission power.

According to embodiments of a fourth aspect of the present invention, a first power control apparatus is provided, where the apparatus includes: a receiving module, configured to receive first information, where the first information is used to determine at least two sounding reference signals (SRSs) or at least two SRS sets for bandwidth aggregation for positioning measurement; and a sending module, configured to send each of the at least two SRSs or each of the at least two SRS sets, where a transmission power of each SRS or each SRS set is a first transmission power.

According to embodiments of a fifth aspect of the present invention, a second power control apparatus is provided, where the apparatus includes: a sending module, configured to send first information, where the first information is used to indicate at least two sounding reference signals (SRSs) or at least two SRS sets for bandwidth aggregation for positioning measurement; and a receiving module, configured to receive each of the at least two SRSs or each of the at least two SRS sets, where a transmission power of each SRS or each SRS set is a first transmission power.

According to embodiments of a sixth aspect of the present invention, a communication device is provided, including: one or more processors; where the processors are configured to invoke instructions to cause the communication device to perform the method for controlling power according to any one of the first aspect or the second aspect.

According to embodiments of a seventh aspect of the present invention, a communication system is provided, including a terminal and a network device, where the terminal is configured to implement the method for controlling power according to any one of the first aspect, and the network device is configured to implement the method for controlling power according to any one of the second aspect.

According to embodiments of an eighth aspect of the present invention, a storage medium is provided, where the storage medium stores instructions, characterized in that when the instructions are run on a communication device, the communication device is caused to perform the method for controlling power according to any one of the first aspect or the second aspect.

**BRIEF DESCRIPTION OF THE DRAWINGS**

The drawings, which are incorporated in and constitute a part of this specification, illustrate embodiments consistent with the present invention and, together with the description, serve to explain the principles of the present invention.

FIG. 1a is a schematic diagram of a communication system architecture according to an embodiment of the present invention.

FIG. 1b is a schematic diagram of bandwidth aggregation of SRS sets according to an embodiment of the present invention.

FIG. 2 is a schematic interaction diagram of a method for controlling power according to an embodiment of the present invention.

FIG. 3a is a flowchart of a method for controlling power according to an embodiment of the present invention.

FIG. 3b is a flowchart of a method for controlling power according to an embodiment of the present invention.

FIG. 3c is a flowchart of a method for controlling power according to an embodiment of the present invention.

FIG. 3d is a flowchart of a method for controlling power according to an embodiment of the present invention.

FIG. 4a is a flowchart of a method for controlling power according to an embodiment of the present invention.

FIG. 4b is a flowchart of a method for controlling power according to an embodiment of the present invention.

FIG. 5 is a flowchart of a method for controlling power according to an embodiment of the present invention.

FIG. 6a is a schematic diagram of a power control apparatus according to an embodiment of the present invention.

FIG. 6b is a schematic diagram of a power control apparatus according to an embodiment of the present invention.

FIG. 7 is a schematic diagram of a communication device according to an embodiment of the present invention.

FIG. 8 is a schematic diagram of a chip structure according to an embodiment of the present invention.

## DETAILED DESCRIPTION

Exemplary embodiments will be described in detail herein, examples of which are illustrated in the drawings. When the following description refers to the drawings, unless otherwise indicated, the same numbers in different drawings represent the same or similar elements. The implementations described in the following exemplary embodiments do not represent all implementations consistent with the present invention.

The network device performs positioning measurement based on SRSs or SRS sets that need to be aggregated, but how the terminal sends the SRSs or SRS sets that need to be aggregated with appropriate power is a problem that needs to be solved.

Embodiments of the present invention propose a method for controlling power, an apparatus, and a storage medium.

In a first aspect, an embodiment of the present invention provides a method for controlling power, performed by a terminal, where the method includes: receiving first information, where the first information is used to determine at least two sounding reference signals (SRSs) or at least two SRS sets for bandwidth aggregation for positioning measurement; and sending each of the at least two SRSs or each of the at least two SRS sets, where a transmission power of each SRS or each SRS set is a first transmission power.

In the above embodiment, the terminal determines the SRSs or SRS sets that need to be aggregated for bandwidth in positioning measurement through the first information, and respectively determines the transmission power of each SRS or SRS set in the SRSs or SRS sets that need to be aggregated for bandwidth, so that the SRSs or SRS sets can be transmitted with an appropriate transmission power, improving the accuracy of positioning measurement.

In combination with the first aspect, in some embodiments, the first transmission power of each SRS or each SRS set is determined based on at least one of: transmission powers of subcarriers corresponding respectively to the at least two SRSs or the at least two SRS sets; resource element (RE) quantities corresponding respectively to the at least two SRSs or the at least two SRS sets; a maximum transmission power limitation; a second transmission power of each of the at least two SRSs or each of the at least two SRS sets; where the second transmission power is determined based on a power control parameter.

In the above embodiment, the first transmission power of each SRS or each SRS set is determined through the at least one item above, so that the SRSs or SRS sets can be transmitted with an appropriate transmission power, improving the accuracy of positioning measurement.

In combination with the first aspect, in some embodiments, the first transmission powers corresponding respectively to the at least two SRSs or the at least two SRS sets are determined based on the transmission powers of the subcarriers corresponding respectively to the at least two SRSs or the at least two SRS sets and the RE quantities corresponding respectively to the at least two SRSs or the at least two SRS sets, and the transmission powers of the subcarriers corresponding respectively to the at least two SRSs or the at least two SRS sets are the same.

In the above embodiment, the first transmission power of each SRS or each SRS set is determined based on the transmission power of the subcarriers corresponding to the at least two SRSs or the at least two SRS sets and the quantity of REs corresponding to each SRS or each SRS set, ensuring that the transmission power of the subcarriers corresponding to the at least two SRSs or the at least two SRS sets is the same, so that the SRSs or SRS sets can be transmitted with an appropriate transmission power, improving the accuracy of positioning measurement.

In combination with the first aspect, in some embodiments, the second transmission powers of the at least two SRSs or the at least two SRS sets are less than or equal to the maximum transmission power limitation, and the transmission powers of the subcarriers corresponding respectively to the at least two SRSs or the at least two SRS sets are determined based on the second transmission power of each of the at least two SRSs or each of the at least two SRS sets and a total of REs of the at least two SRSs or the at least two SRS sets.

In the above embodiment, the second transmission powers of the at least two SRSs or the at least two SRS sets are less than or equal to the maximum transmission power limitation, and the transmission powers of the subcarriers corresponding respectively to the at least two SRSs or the at least two SRS sets are determined based on the second transmission power of each of the at least two SRSs or each of the at least two SRS sets and a total of REs of the at least two SRSs or the at least two SRS sets.

In combination with the first aspect, in some embodiments, the second transmission powers of the at least two SRSs or the at least two SRS sets are greater than the maximum transmission power limitation, and the transmission powers of the subcarriers corresponding respectively to the at least two SRSs or the at least two SRS sets are determined based on the maximum transmission power limitation and a total of REs of the at least two SRSs or the at least two SRS sets.

In the above embodiment, when the second transmission powers of the at least two SRSs or the at least two SRS sets are greater than the maximum transmission power limitation, the transmission power of the subcarriers is determined based on the maximum transmission power limitation and the total quantity of REs corresponding to the at least two SRSs or the at least two SRS sets, avoiding the actual transmission power of the SRSs or SRS sets from exceeding the maximum transmission power.

In combination with the first aspect, in some embodiments, the second transmission powers of the at least two SRSs or the at least two SRS sets are greater than the maximum transmission power limitation, a first transmission power of an SRS or an SRS set that satisfies a first rule among the at least two SRSs or the at least two SRS sets is a second transmission power of the SRS or the SRS set that satisfies the first rule, and a first transmission power of the SRS or the SRS set that does not satisfy the first rule among the at least two SRSs or the at least two SRS sets is a third transmission power, the third transmission power is a transmission power obtained after performing a power back-off on the second transmission power of the SRS or the SRS set that does not satisfy the first rule among the at least two SRSs or the at least two SRS sets

In the above embodiment, when the second transmission powers of the at least two SRSs or the at least two SRS sets are greater than the maximum transmission power limitation, the first transmission power of different SRSs or SRS sets is determined based on the first rule, avoiding the first transmission power from exceeding the maximum transmission power.

In combination with the first aspect, in some embodiments, the first rule is that a channel quality of a channel corresponding to the SRS or the SRS set is greater than a threshold; or the first rule is indicated by the network device.

In the above embodiment, by ensuring the transmission power of the SRS or the SRS set whose channel quality is greater than the threshold, the transmission quality of the SRS or the SRS set is ensured, improving the accuracy of positioning measurement.

In combination with the first aspect, in some embodiments, a sum of the first transmission power of the SRS or the SRS set that satisfies the first rule among the at least two SRSs or the at least two SRS sets and the first transmission power of the SRS or the SRS set that does not satisfy the first rule among the at least two SRSs or the at least two SRS sets is less than or equal to the maximum transmission power.

In the above embodiment, the actual transmission power of each SRS or SRS set after power back-off cannot exceed the maximum transmission power limitation.

In combination with the first aspect, in some embodiments, the second transmission powers of the at least two SRSs or the at least two SRS sets are greater than the maximum transmission power limitation, and the first transmission powers corresponding respectively to the at least two SRSs or the at least two SRS sets are the same; or each of the first transmission powers corresponding respectively to the at least two SRSs or the at least two SRS sets is determined based on a proportion of the respective second transmission power of the SRS or the SRS set in the maximum transmission power limitation.

In combination with the first aspect, in some embodiments, the first information is used to indicate identifiers of the at least two SRSs or the at least two SRS sets.

In the above embodiment, by configuring identifiers for the SRSs or SRS sets, the terminal can distinguish different SRSs or SRS sets based on the identifiers.

In combination with the first aspect, in some embodiments, the identifiers of the at least two SRSs or the at least two SRS sets are the same.

In the above embodiment, the terminal determines the SRSs or SRS sets that need to be aggregated for bandwidth through the identifiers, so that the SRSs or SRS sets can be transmitted with an appropriate transmission power, improving the accuracy of positioning measurement.

In combination with the first aspect, in some embodiments, the first information is used to indicate one or more SRS lists, where the one or more SRS lists include the at least two SRSs or the at least two SRS sets.

In the above embodiment, the terminal determines the SRSs or SRS sets that need to be aggregated for bandwidth through the SRS lists, so that the SRSs or SRS sets can be transmitted with an appropriate transmission power, improving the accuracy of positioning measurement.

In a second aspect, an embodiment of the present invention provides a method for controlling power, including: sending first information, wherein the first information is used to determine at least two sounding reference signals (SRSs) or at least two SRS sets for bandwidth aggregation for positioning measurement; and

receiving each of the at least two SRSs or each of the at least two SRS sets, wherein transmission powers corresponding respectively to the at least two SRSs or the at least two SRS sets are first transmission powers.

In combination with the second aspect, in some embodiments, the first transmission powers corresponding respectively to the at least two SRSs or the at least two SRS sets are determined based on at least one of:

transmission powers of subcarriers corresponding respectively to the at least two SRSs or the at least two SRS sets;
resource element (RE) quantities corresponding respectively to the at least two SRSs or the at least two SRS sets;
a maximum transmission power limitation;
a second transmission power of each of the at least two SRSs or each of the at least two SRS sets;
the second transmission power is determined based on a power control parameter.

In combination with the second aspect, in some embodiments, the first transmission powers corresponding respectively to the at least two SRSs or the at least two SRS sets are determined based on the transmission powers of the subcarriers corresponding respectively to the at least two SRSs or the at least two SRS sets and the RE quantities corresponding respectively to the at least two SRSs or the at least two SRS sets, and the transmission powers of the subcarriers corresponding respectively to the at least two SRSs or the at least two SRS sets are the same.

In combination with the second aspect, in some embodiments, the second transmission powers of the at least two SRSs or the at least two SRS sets are less than or equal to the maximum transmission power limitation, and the transmission powers of the subcarriers corresponding respectively to the at least two SRSs or the at least two SRS sets are determined based on the second transmission power of each of the at least two SRSs or each of the at least two SRS sets and a total of REs of the at least two SRSs or the at least two SRS sets.

In combination with the second aspect, in some embodiments, the second transmission powers of the at least two SRSs or the at least two SRS sets are greater than the maximum transmission power limitation, and the transmission powers of the subcarriers corresponding respectively to the at least two SRSs or the at least two SRS sets are determined based on the maximum transmission power limitation and a total of REs of the at least two SRSs or the at least two SRS sets.

In combination with the second aspect, in some embodiments, the second transmission powers of the at least two SRSs or the at least two SRS sets are greater than the maximum transmission power limitation, a first transmission power of an SRS or an SRS set that satisfies a first rule among the at least two SRSs or the at least two SRS sets is a second transmission power of the SRS or the SRS set that satisfies the first rule, and a first transmission power of the SRS or the SRS set that does not satisfy the first rule among the at least two SRSs or the at least two SRS sets is a third transmission power;

the third transmission power is a transmission power obtained after performing a power back-off on the second transmission power of the SRS or the SRS set that does not satisfy the first rule among the at least two SRSs or the at least two SRS sets.

In combination with the second aspect, in some embodiments, the first rule is that a channel quality of a channel corresponding to SRS or SRS set is greater than a threshold; or

the first rule is indicated by a network device.

In combination with the second aspect, in some embodiments, a sum of the first transmission power of the SRS or the SRS set that satisfies the first rule among the at least two SRSs or the at least two SRS sets and the first transmission power of the SRS or the SRS set that does not satisfy the first rule among the at least two SRSs or the at least two SRS sets is less than or equal to the maximum transmission power.

In combination with the second aspect, in some embodiments, the second transmission powers of the at least two SRSs or the at least two SRS sets is greater than the maximum transmission power limitation, and the first transmission powers corresponding respectively to the at least two SRSs or the at least two SRS sets are the same; or

each of the first transmission powers corresponding respectively to the at least two SRSs or the at least two SRS sets is determined based on a proportion of the second transmission power of each of the SRSs or each of the SRS sets in the maximum transmission power limitation.

In combination with the second aspect, in some embodiments, the first information is used to indicate identifiers of the at least two SRSs or the at least two SRS sets.

In combination with the second aspect, in some embodiments, the identifiers of the at least two SRSs or the at least two SRS sets are the same.

In combination with the second aspect, in some embodiments, the first information is used to indicate one or more SRS lists, where the one or more SRS lists include the at least two SRSs or the at least two SRS sets.

In a third aspect, an embodiment of the present invention provides a method for controlling power, for a communication system, where the method includes: sending, by a network device, first information to a terminal, wherein the first information is used to determine at least two sounding reference signals (SRSs) or at least two SRS sets for bandwidth aggregation for positioning measurement; and sending to the network device, by the terminal, each of the at least two SRSs or each of the at least two SRS sets, wherein transmission powers corresponding respectively to the at least two SRSs or the at least two SRS sets are first transmission powers.

In a fourth aspect, an embodiment of the present invention provides a receiving module configured to receive first information, where the first information is used to determine at least two sounding reference signals (SRSs) or at least two SRS sets for bandwidth aggregation for positioning measurement; and a sending module configured to send each of the at least two SRSs or each of the at least two SRS sets, where transmission powers corresponding respectively to the at least two SRSs or the at least two SRS sets are first transmission powers.

In a fifth aspect, an embodiment of the present invention provides a second power control apparatus, where the apparatus includes: a sending module, configured to send first information, wherein the first information is used to determine at least two sounding reference signals (SRSs) or at least two SRS sets for bandwidth aggregation for positioning measurement; and a receiving module, configured to receive each of the at least two SRSs or each of the at least two SRS sets, wherein transmission powers corresponding respectively to the at least two SRSs or the at least two SRS sets are first transmission powers.

In a sixth aspect, an embodiment of the present invention provides a communication device, including: one or more processors; where the processors are configured to invoke instructions to cause the communication device to perform the method for controlling power according to any one of the first aspect or the second aspect.

In a seventh aspect, an embodiment of the present invention provides a communication system, including a terminal and a network device, where the terminal is configured to implement the method for controlling power according to any one of the first aspect, and the network device is configured to implement the method for controlling power according to any one of the second aspect.

In an eighth aspect, an embodiment of the present invention provides a storage medium, where the storage medium stores instructions, characterized in that when the instructions are run on a communication device, the communication device is caused to perform the method for controlling power according to any one of the first aspect or the second aspect.

In a ninth aspect, an embodiment of the present invention provides a program product, where when the program product is executed by a communication device, the communication device is caused to perform the method as described in the optional implementations of the first aspect and the second aspect, or the second aspect and the third aspect.

In a tenth aspect, an embodiment of the present invention provides a computer program, where when run on a computer, the computer is caused to perform the method as described in the optional implementations of the first aspect and the third aspect, or the second aspect and the third aspect.

It can be understood that the above first communication apparatus, second communication apparatus, communication device, communication system, storage medium, program product, and computer program are all used to perform the method provided by embodiments of the present invention. Therefore, the beneficial effects that can be achieved can be referred to the beneficial effects in the corresponding method, and are not repeated here.

Embodiments of the present invention propose "a method for controlling power, apparatus, device, system, and storage medium". In some embodiments, the method for controlling power may be interchangeably replaced with terms such as communication method, information processing method, etc., the power control apparatus may be interchangeably replaced with terms such as communication apparatus, information processing apparatus, etc., and the information processing system may be interchangeably replaced with terms such as communication system, etc.

Embodiments of the present invention are not exhaustive, but only illustrative of some embodiments, and are not intended to specifically limit the protection scope of the present invention. In case of no conflict, each step in a certain embodiment may be implemented as an independent embodiment, and the steps may be arbitrarily combined. For example, a solution obtained by removing some steps in a certain embodiment may also be implemented as an independent embodiment, and the order of the steps in a certain embodiment may be arbitrarily exchanged. In addition, the optional implementations in a certain embodiment may be arbitrarily combined. Furthermore, embodiments may be arbitrarily combined. For example, part or all of the steps of different embodiments may be arbitrarily combined, and a certain embodiment may be arbitrarily combined with optional implementations of other embodiments.

In embodiments of the present invention, unless otherwise specified and unless there is a logical conflict, the terms and/or descriptions between embodiments are consistent and may refer to each other. The technical features in different embodiments may be combined according to their inherent logical relationships to form new embodiments.

The terms used in embodiments of the present invention are only for the purpose of describing specific embodiments and are not intended to limit the present invention.

In embodiments of the present invention, unless otherwise stated, elements expressed in the singular form, such as "a", "an", "the", "said", "above", "aforementioned", "this", etc., may mean "one and only one", or may mean "one or more", "at least one", etc. For example, when an article such as "a", "an", or "the" is used in translation, the noun following the article may be understood as a singular expression or a plural expression.

In embodiments of the present invention, "a plurality of" means two or more.

In some embodiments, terms such as "at least one of", "at least one of", "at least one of", "one or more", "a plurality of", "multiple", etc., may be used interchangeably.

Descriptions such as "at least one of A, B, C, ...", "A and/or B and/or C, ..." in embodiments of the present invention include the case where any one of A, B, C, ... exists alone, and also include the case of any combination of any multiple of A, B, C, ..., and each case may exist alone. For example, "at least one of A, B, and C" includes the cases of A alone, B alone, C alone, combination of A and B, combination of A and C, combination of B and C, and combination of A, B, and C. For example, "A and/or B" includes the cases of A alone, B alone, and combination of A and B.

In some embodiments, descriptions such as "in one case A, in another case B", "in response to one case A, in response to another case B", etc., may include the following technical solutions: performing A regardless of B, i.e., in some embodiments, A; performing B regardless of A, i.e., in some embodiments, B; selectively performing A or B, i.e., in some embodiments, selecting to perform A or B; performing both A and B, i.e., in some embodiments, A and B. Similar applies when there are more branches such as A, B, C, etc.

The prefixes such as "first", "second", etc., in embodiments of the present invention are only used to distinguish different described objects and do not limit the position, order, priority, quantity, or content of the described objects. The description of the objects refers to the description in the claims or the context of embodiments, and should not be construed as an unnecessary limitation due to the use of the prefixes. For example, if the described object is a "field", the ordinal numbers before "field" in "first field" and "second field" do not limit the position or order between the fields, and "first" and "second" do not limit whether the modified "fields" are in the same message, nor do they limit the sequence of "first field" and "second field". Another example, if the described object is a "level", the ordinal numbers before "level" in "first level" and "second level" do not limit the priority between the levels. Another example, the quantity of the described object is not limited by the ordinal numbers, and may be one or multiple. Taking "first device" as an example, the quantity of "device" may be one or multiple. In addition, objects modified by different prefixes may be the same or different. For example, if the described object is a "device", "first device" and "second device" may be the same device or different devices, and their types may be the same or different. Another example, if the described object is "information", "first information" and "second information" may be the same information or different information, and their contents may be the same or different.

In some embodiments, "including A", "containing A", "used to indicate A", "carrying A" may be interpreted as directly carrying A, or indirectly indicating A.

In some embodiments, terms such as "in response to...", "in response to determining...", "in the case of...", "when...", "if...", etc., may be used interchangeably.

In some embodiments, terms such as "greater than", "greater than or equal to", "not less than", "more than", "more than or equal to", "not less than", "higher than", "higher than or equal to", "not lower than", "above", etc., may be used interchangeably. Terms such as "less than", "less than or equal to", "not greater than", "less than", "less than or equal to", "not more than", "lower than", "lower than or equal to", "not higher than", "below", etc., may be used interchangeably.

In some embodiments, an apparatus, etc., may be interpreted as physical or virtual, and its name is not limited to the names recorded in embodiments. Terms such as "apparatus", "equipment", "device", "circuit", "network element", "node", "function", "unit", "section", "system", "network", "chip", "chip system", "entity", "subject", etc., may be used interchangeably.

In some embodiments, terms such as "access network device (AN device)", "radio access network device (RAN device)", "base station (BS)", "radio base station", "fixed station", "node", "access point", "transmission point (TP)", "reception point (RP)", "transmission/reception point (TRP)", "panel", "antenna panel", "antenna array", "cell", "macro cell", "small cell", "femto cell", "pico cell", "sector", "cell group", "carrier", "component carrier", "bandwidth part (BWP)", etc., may be used interchangeably.

In some embodiments, terms such as "terminal", "terminal device", "user equipment (UE)", "user terminal", "mobile station (MS)", "mobile terminal (MT)", "subscriber station", "mobile unit", "subscriber unit", "wireless unit", "remote unit", "mobile device", "wireless device", "wireless communication device", "remote device", "mobile subscriber station", "access terminal", "mobile terminal", "wireless terminal", "remote terminal", "handset", "user agent", "mobile client", "client", etc., may be used interchangeably.

In some embodiments, an access network device, a core network device, or a network device may be replaced by a terminal. For example, embodiments of the present invention may also be applied to a structure where communication between an access network device, a core network device, or a network device and a terminal is replaced by communication between multiple terminals (e.g., which may also be called device-to-device (D2D), vehicle-to-everything (V2X), etc.). In this case, the terminal may have all or part of the functions of the access network device. In addition, terms such as "uplink", "downlink", etc., may be replaced by terms corresponding to inter-terminal communication (e.g., "side"). For example, an uplink channel, a downlink channel, etc., may be replaced by a sidelink channel, and an uplink link, a downlink link, etc., may be replaced by a sidelink.

In some embodiments, a terminal may be replaced by an access network device, a core network device, or a network device. In this case, the access network device, core network device, or network device may have all or part of the functions of the terminal.

In some embodiments, the names of information, etc., are not limited to the names recorded in the embodiments. Terms such as "information", "message", "signal", "signaling", "report", "configuration", "indication", "instruction", "command", "channel", "parameter", "field", "field", "symbol", "symbol", "codebook", "codeword", "codepoint", "bit", "data", "program", "chip", etc., may be used interchangeably.

In some embodiments, terms such as "uplink", "uplink link", "physical uplink", etc., may be used interchangeably. Terms such as "downlink", "downlink link", "physical downlink", etc., may be used interchangeably. Terms such as "side", "sidelink", "sidelink communication", "sidelink communication", "direct", "direct link", "direct communication", "direct link communication", etc., may be used interchangeably.

In some embodiments, terms such as "downlink control information (DCI)", "downlink (DL) assignment", "DL DCI", "uplink (UL) grant", "UL DCI", etc., may be used interchangeably.

In some embodiments, terms such as "physical downlink shared channel (PDSCH)", "DL data", etc., may be used interchangeably. Terms such as "physical uplink shared channel (PUSCH)", "UL data", etc., may be used interchangeably.

In some embodiments, terms such as "radio", "wireless", "radio access network (RAN)", "access network (AN)", "RAN-based", etc., may be used interchangeably.

In some embodiments, terms such as "search space", "search space set", "search space configuration", "search space set configuration", "control resource set (CORESET)", "CORESET configuration", etc., may be used interchangeably.

In some embodiments, terms such as "synchronization signal (SS)", "synchronization signal block (SSB)", "reference signal (RS)", "pilot", "pilot signal", etc., may be used interchangeably.

In some embodiments, terms such as "time", "time point", "time", "time position", etc., may be used interchangeably. Terms such as "duration", "time period", "time window", "window", "time", etc., may be used interchangeably.

In some embodiments, terms such as "component carrier (CC)", "cell", "frequency carrier", "carrier frequency", etc., may be used interchangeably.

In some embodiments, terms such as "resource block (RB)", "physical resource block (PRB)", "sub-carrier group (SCG)", "resource element group (REG)", "PRB pair", "RB pair", "resource element (RE)", etc., may be used interchangeably.

In some embodiments, terms such as "wireless access scheme", "waveform", etc., may be used interchangeably.

In some embodiments, terms such as "precoding", "precoder", "weight", "precoding weight", "quasi-co-location (QCL)", "transmission configuration indication (TCI) state", "spatial relation", "spatial domain filter", "transmission power", "phase rotation", "antenna port", "antenna port group", "layer", "the number of layers", "rank", "resource", "resource set", "resource group", "beam", "beam width", "beam angular degree", "antenna", "antenna element", "panel", etc., may be used interchangeably.

In some embodiments, terms such as "frame", "radio frame", "subframe", "slot", "sub-slot", "mini-slot", "symbol", "symbol", "transmission time interval (TTI)", etc., may be used interchangeably.

In some embodiments, terms such as "obtain", "acquire", "get", "receive", "transmit", "bidirectional transmission", "send and/or receive" may be used interchangeably, and may be interpreted as receiving from another subject, obtaining from a protocol, obtaining by self-processing, self-implementation, etc.

In some embodiments, terms such as "send", "transmit", "report", "deliver", "transmit", "bidirectional transmission", "send and/or receive" may be used interchangeably.

In some embodiments, "predetermined", "preset" may be interpreted as pre-specified in a protocol, etc., or as the apparatus performing a pre-set action.

In some embodiments, "determining" may be interpreted as judging, deciding, calculating, computing, processing, deriving, investigating, searching, looking up, retrieving, inquiring, ascertaining, receiving, transmitting, inputting, outputting, accessing, resolving, selecting, choosing, establishing, comparing, "assuming", "expecting", "considering", broadcasting, notifying, communicating, forwarding, configuring, reconfiguring, allocating, mapping, assigning, etc., but is not limited thereto.

In some embodiments, judging or determining may be performed by a value represented by 1 bit (0 or 1), or by a Boolean value represented by true or false, or by numerical comparison (e.g., comparison with a predetermined value), but is not limited thereto.

In some embodiments, "network" may be interpreted as devices included in the network (e.g., access network devices, core network devices, etc.).

In some embodiments, "not expecting to receive" may be interpreted as not receiving on time domain resources and/or frequency domain resources, or as not performing subsequent processing on the data, etc., after receiving the data, etc. "Not expecting to send" may be interpreted as not sending, or as sending but not expecting the receiver to respond to the sent content.

In some embodiments, obtaining data, information, etc., may comply with the laws and regulations of the country where it is located.

In some embodiments, data, information, etc., may be obtained after obtaining user consent.

In addition, each element, each row, or each column in the tables of embodiments of the present invention may be implemented as an independent embodiment, and any combination of elements, rows, or columns may also be implemented as an independent embodiment.

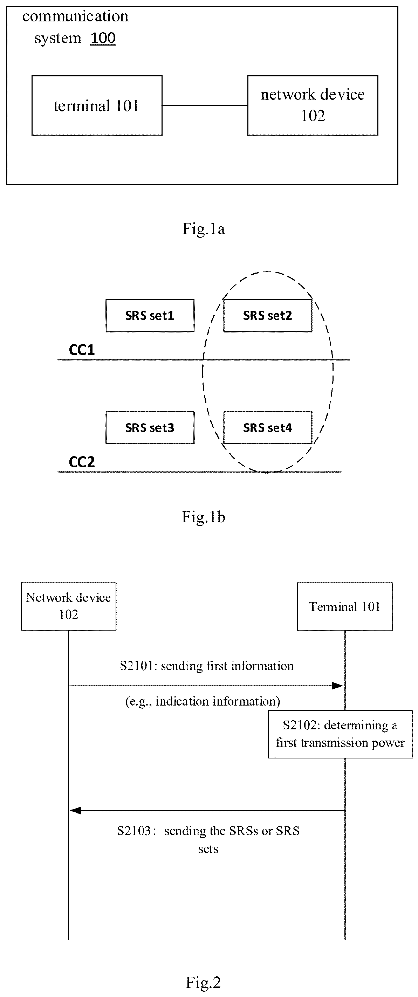

FIG. 1a is a schematic diagram of a communication system architecture according to an embodiment of the present invention.

As shown in FIG. 1a, a communication system 100 includes a terminal 101 and a network device 102.

In some embodiments, the network device 102 may include at least one of an access network device and a core network device.

In some embodiments, the terminal 101 includes, for example, at least one of a mobile phone, a wearable device, an Internet of Things device, a car with communication function, a smart car, a tablet computer (Pad), a computer with wireless transceiver function, a virtual reality (VR) terminal device, an augmented reality (AR) terminal device, a wireless terminal device in industrial control, a wireless terminal device in self-driving, a wireless terminal device in remote medical surgery, a wireless terminal device in smart grid, a wireless terminal device in transportation safety, a wireless terminal device in smart city, a wireless terminal device in smart home, but is not limited thereto.

In some embodiments, the access network device is, for example, a node or device that connects a terminal to a wireless network. The access network device may include at least one of an evolved NodeB (eNB) in a 5G communication system, a next generation evolved NodeB (ng-eNB), a next generation NodeB (gNB), a Node B (NB), a home Node B (HNB), a home evolved NodeB (HeNB), a wireless backhaul device, a radio network controller (RNC), a base station controller (BSC), a base transceiver station (BTS), a baseband unit (BBU), a mobile switching center, a base station in a 6G communication system, an Open RAN, a Cloud RAN, a base station in other communication systems, an access node in a wireless fidelity (WiFi) system, but is not limited thereto.

In some embodiments, the technical solution of the present invention may be applied to an Open RAN architecture. In this case, the interfaces between access network devices or within an access network device involved in embodiments of the present invention may become internal interfaces of the Open RAN, and the processes and information interaction between these internal interfaces may be implemented by software or programs.

In some embodiments, the access network device may be composed of a central unit (CU) and a distributed unit (DU), where the CU may also be called a control unit. The CU-DU structure may split the protocol layers of the access network device, where the functions of some protocol layers are placed in the CU for centralized control, and the functions of the remaining part or all of the protocol layers are distributed in the DU, and the CU centrally controls the DU, but is not limited thereto.

In some embodiments, the core network device may be one device, including one or more network elements, or may be multiple devices or device groups, including one or more network elements, or may be physical. The core network includes, for example, at least one of an evolved packet core (EPC), a 5G core network (5GCN), or a next generation core (NGC).

It can be understood that the communication system described in embodiments of the present invention is to illustrate the technical solutions of embodiments of the present invention more clearly, and does not constitute a limitation on the technical solutions provided by embodiments of the present invention. Those of ordinary skill in the art may understand that as the system architecture evolves and new business scenarios emerge, the technical solutions provided by embodiments of the present invention are equally applicable to similar technical problems.

The following embodiments of the present invention may be applied to the communication system 100 shown in FIG. 1, or part of the entities, but are not limited thereto. The entities shown in FIG. 1 are exemplary. The communication system may include all or part of the entities in FIG. 1, and may also include other entities not shown in FIG. 1. The number and form of the entities are arbitrary. The connection relationships between the entities are exemplary. The entities may be connected or not connected. The connection may be in any manner, may be direct or indirect, and may be wired or wireless.

Embodiments of the present invention may be applied to long term evolution (LTE), LTE-Advanced (LTE-A), LTE-Beyond (LTE-B), SUPER 3G, IMT-Advanced, the fourth generation mobile communication system (4G), the fifth generation mobile communication system (5G), 5G new radio (NR), future radio access (FRA), new-radio access technology (RAT), new radio (NR), new radio access (NX), future generation radio access (FX), Global System for Mobile communications (GSM (registered trademark)), CDMA2000, ultra mobile broadband (UMB), IEEE 802.11 (Wi-Fi (registered trademark)), IEEE 802.16 (WiMAX (registered trademark)), IEEE 802.20, ultra-wideband (UWB), Bluetooth (registered trademark), public land mobile network (PLMN) network, device-to-device (D2D) system, machine to machine (M2M) system, Internet of Things (IoT) system, vehicle-to-everything (V2X), systems using other method for controlling powers, next-generation systems based on them, etc. In addition, a combination of multiple systems (e.g., a combination of LTE or LTE-A and 5G) may be applied.

In embodiments of the present invention, the accuracy of positioning measurement is improved by bandwidth aggregation of sounding reference signals (SRSs) or SRS sets.

FIG. 1b is a schematic diagram of bandwidth aggregation of SRS sets according to an embodiment of the present invention.

As shown in FIG. 1b, the terminal 101 sends SRS set1 and SRS set2 on component carrier (CC) 1, and sends SRS set3 and SRS set4 on CC2. When the network device 102 receives the SRS sets for positioning measurement, it performs bandwidth aggregation on SRS set2 on CC1 and SRS set4 on CC2 to obtain a positioning measurement result.

Optionally, the transmission power of the SRSs or SRS sets on each carrier satisfies the following relationship:

$$P_{SRS,b,f,c}(i,q_s) = min \begin{cases} P_{CMAX,f,c}(i) \\ P_{0\_SRS,b,f,c}(q_s) + 10log_{10}(2^{\mu} \cdot M_{SRS,b,f,c}(i)) + \alpha_{SRS,b,f,c}(q_s) \cdot PL_{b,f,c}(q_d) \end{cases}$$

where $P_{CMAX,f,c}(i)$ represents the transmission power of the SRS in the i-th transmission of the terminal 101, $P_{0\_SRS,b,f,c}(q_s)$ represents the target reception power of the network device, $M_{SRS,b,f,c}(i)$ represents the bandwidth of the SRS, $\alpha_{SRS,b,f,c(q_s)}$ represents a path compensation factor, $PL_{b,f,c}(q_d)$ represents a path loss value estimated based on a downlink reference signal, b represents an activated uplink bandwidth part, f represents a carrier frequency, c represents a serving cell, i represents the i-th transmission, and $q_s$ represents an index, and $q_d$ represents a downlink reference signal index used for path loss estimation.

Optionally, in a carrier aggregation scenario, if the channels/signals simultaneously sent on each CC exceed the maximum transmission power of the terminal, based on a predefined priority, the transmission power of the channel/signal with high priority is guaranteed, and the transmission power of the channel/signal with low priority is backed off. For channels/signals with the same priority, the transmission power of the channel/signal on the primary cell is guaranteed.

Optionally, when sending an SRS or an SRS set, when mapping an SRS sequence on a certain CC to physical resources, it needs to be multiplied by a weighting coefficient $\beta_{SRS}$, and it needs to ensure that the total power of each RE is equal to the transmission power determined as above. The SRS weighting coefficients on different CCs are determined separately, and whether they are the same is not required.

Optionally, to improve the accuracy of positioning measurement, it is considered to perform bandwidth aggregation of SRSs or SRS sets on different carriers. For SRSs used for bandwidth aggregation, it may be necessary to ensure that the subcarrier power of the SRSs or SRS sets on all CCs is the same. How to determine the transmission power of the SRSs or SRS sets used for bandwidth aggregation is a problem that needs to be solved. Moreover, if the transmission power of the SRSs or SRS sets used for bandwidth aggregation on different CCs exceeds the user's transmission power limitation, how to handle it has not been clarified yet.

FIG. 2 is a schematic interaction diagram of a method for controlling power according to an embodiment of the present invention. As shown in FIG. 2, an embodiment of the present invention relates to a method for controlling power, used in a communication system 100, where the method includes:

Step S2101, the network device 102 sending first information to the terminal 101.

In some embodiments, the terminal 101 receives the first information sent by the network device 102.

In some embodiments, the first information is used to indicate at least two SRSs.

In some embodiments, the first information is used to indicate at least two SRS sets.

Optionally, the name of the first information is not limited, for example, it may be "indication information", "configuration information", etc.

Optionally, the at least two SRSs or the at least two SRS sets are used for aggregation.

Optionally, the at least two SRSs or the at least two SRS sets are used for bandwidth aggregation.

Optionally, the at least two SRSs or the at least two SRS sets are used for positioning measurement.

In some embodiments, the first information is used to indicate at least two SRSs or at least two SRS sets for bandwidth aggregation for positioning measurement.

In some embodiments, the first information is used to indicate identifiers of the at least two SRSs or the at least two SRS sets.

Optionally, the identifier may be "ID", "link ID", etc.

Optionally, the identifiers of the at least two SRSs or the at least two SRS sets are the same.

In some embodiments, the first information is used to indicate one or more SRS lists.

Optionally, each SRS list in the one or more SRS lists includes at least two SRSs.

Optionally, each SRS list in the one or more SRS lists includes at least two SRS sets.

Optionally, the name of the SRS list is not limited, for example, it may be "SRS table", "SRS information", etc.

Optionally, the at least two SRSs or the at least two SRS sets included in each SRS list are used for bandwidth aggregation for positioning measurement.

Step S2102, determining a first transmission power.

In some embodiments, the terminal 101 determines the first transmission power of each of the at least two SRSs.

In some embodiments, the terminal 101 determines the first transmission power of each of the at least two SRS sets.

In some embodiments, the first transmission power is the actual transmission power at which the terminal sends each SRS or each SRS set.

In some embodiments, the name of the transmission power is not limited, for example, it may be "sending power", "transmission power", etc.

In some embodiments, the first transmission power of different SRSs or different SRS sets in the at least two SRSs or the at least two SRS sets may be the same or different.

In some embodiments, the terminal 101 respectively determines the first transmission power of each SRS or SRS set in the at least two SRSs or the at least two SRS sets.

In some embodiments, the first transmission power of each SRS or each SRS set is determined based on at least one of:

transmission powers of subcarriers corresponding respectively to the at least two SRSs or the at least two SRS sets;
resource element (RE) quantities corresponding respectively to the at least two SRSs or the at least two SRS sets;
a maximum transmission power limitation;
second transmission powers corresponding respectively to the at least two SRSs or the at least two SRS sets;
the second transmission powers are determined based on power control parameters.

In some embodiments, the transmission power of the subcarriers corresponding to the at least two SRSs or the at least two SRS sets is the same.

Optionally, when mapping the SRS sequences on each CC of the at least two SRSs or the at least two SRS sets to physical resources, they need to be multiplied by the same weighting coefficient $\beta_{SRS}$, thereby ensuring that the transmission power of the subcarriers corresponding to the at least two SRSs or the at least two SRS sets is the same.

In some embodiments, the transmission power of the subcarriers corresponding to the at least two SRSs or the at least two SRS sets is different.

Optionally, when mapping the SRS sequences on each CC of the at least two SRSs or the at least two SRS sets to physical resources, they may be multiplied by different weighting coefficients $\beta_{SRS}$.

Optionally, the transmission power of the subcarriers is used to represent the transmission power of each RE after the SRSs or SRS sets on each CC are mapped to physical resources.

In some embodiments, terms such as subcarrier, RE, etc., may be used interchangeably.

Optionally, the transmission power of the subcarriers may also be called "transmission power of an RE", etc.

In some embodiments, the quantity of REs corresponding to each SRS or each SRS set is the number of REs included in the frequency domain resources allocated by the network device 102 to each SRS or each SRS set.

In some embodiments, the maximum transmission power limitation is the maximum transmission power allowed by the terminal 101.

Optionally, the maximum transmission power limitation may also be called "maximum transmission power allowed by the terminal", "maximum transmission power supported by the terminal", etc.

Optionally, the name of the maximum transmission power is not limited, for example, it may be "maximum sending power", "maximum transmission power", etc.

In some embodiments, the second transmission power of each SRS or each SRS set is determined based on a power control parameter.

Optionally, the second transmission power is the transmission power at which the terminal 101 expects to send the SRS or SRS set.

Optionally, the second transmission power satisfies the following relationship:

$$P_{SRS,b,f,c}(i,q_s) = P_{0\_SRS,b,f,c}(q_s) + 10log_{10}(2^{\mu} \cdot M_{SRS,b,f,c}(i)) + \alpha_{SRS,b,f,c}(q_s) \cdot PL_{b,f,c}(q_d)$$

where $P_{0\_SRS,b,f,c}(q_s)$ represents the target reception power of the network device, $M_{SRS,b,f,c}(i)$ represents the bandwidth of the SRS, $\alpha_{SRS,b,f,c}(q_s)$ represents a path compensation factor, $PL_{b,f,c}(q_d)$ represents a path loss value estimated based on a downlink reference signal, b represents an activated uplink bandwidth part, f represents a carrier frequency, c represents a serving cell, i represents the i-th transmission, and $q_s$ represents an index, and $q_d$ represents a downlink reference signal index used for path loss estimation.

In some embodiments, the first transmission power of each SRS or each SRS set is determined based on the transmission power of the subcarriers corresponding to the at least two SRSs or the at least two SRS sets and the quantity of REs corresponding to each SRS or each SRS set.

Optionally, the transmission power of the subcarriers corresponding to the at least two SRSs or the at least two SRS sets is the same.

Optionally, the first transmission power of each SRS or each SRS set satisfies the following relationship:

$$P_{CC(i)} = P_{RE} \times sum(RE(i))$$

where $P_{CC}(i)$ represents the first transmission power of the SRS or SRS set on the i-th CC among the at least two SRSs or SRS sets, $P_{RE}$ represents the transmission power of the subcarriers corresponding to the at least two SRSs or the at least two SRS sets, and $RE(i)$ represents the number of REs included in the frequency domain resources allocated to the SRS or SRS set on the i-th CC among the at least two SRSs or SRS sets.

For example, if SRS1 in the at least two SRSs or SRS sets corresponds to the first CC, and the number of REs in the first CC is 12, then $P_{CC(1)} = P_{RE} \times 12$.

In some embodiments, the second transmission powers of the at least two SRSs or the at least two SRS sets are less than or equal to the maximum transmission power limitation.

Optionally, the transmission powers of the subcarriers corresponding respectively to the at least two SRSs or the at least two SRS sets are determined based on the second transmission power of each SRS or each SRS set and a total quantity of REs corresponding to the at least two SRSs or the at least two SRS sets.

Optionally, the second transmission power of each SRS or each SRS set is a sum of the second transmission powers of all SRSs or SRS sets in the at least two SRSs or the at least two SRS sets.

For example, if the at least two SRSs or SRS sets include three SRSs, namely SRS1, SRS2, and SRS3, where the second transmission power of SRS1 is P1, the second transmission power of SRS2 is P2, and the second transmission power of SRS3 is P3, then the second transmission power of each SRS or each SRS set is P1 + P2 + P3.

Optionally, the total quantity of REs corresponding to the at least two SRSs or the at least two SRS sets is the sum of the quantities of REs corresponding to all SRSs or SRS sets in the at least two SRSs or the at least two SRS sets.

For example, if the at least two SRSs or SRS sets include three SRSs, namely SRS1, SRS2, and SRS3, where the quantity of REs corresponding to SRS1 is 12, the quantity of REs corresponding to SRS2 is 24, and the quantity of REs corresponding to SRS3 is 12, then the total quantity of REs corresponding to the at least two SRSs or the at least two SRS sets is 12 + 24 + 12 = 48.

Optionally, the transmission power of the subcarriers satisfies the following relationship:

$$P_{RE} = \frac{P_{sum}}{sum(REs)}$$

where $P_{RE}$ represents the transmission power of the subcarriers, $P_{sum}$ represents the sum of the second transmission powers of all SRSs or SRS sets included in the at least two SRSs or the at least two SRS sets, and $sum(REs)$ represents the total quantity of REs corresponding to the at least two SRSs or the at least two SRS sets.

For example, if the second transmission power of SRS1 is P1, the second transmission power of SRS2 is P2, the second transmission power of SRS3 is P3, the quantity of REs corresponding to SRS1 is 12, the quantity of REs corresponding to SRS2 is 24, and the quantity of REs corresponding to SRS3 is 12, then:

$$P_{RE} = \frac{P_1 + P_2 + P_3}{12 + 24 + 12} = \frac{P_1 + P_2 + P_3}{48}$$

Optionally, the first transmission power of each SRS or each SRS set satisfies the following relationship:

$$P_{CC(i)} = \frac{\hat{P}_{sum}}{sum(REs)} \times sum(RE(i))$$

where $P_{CC(i)}$ represents the first transmission power of the SRS or SRS set on the i-th CC among the at least two SRSs or SRS sets, $P_{sum}$ represents the sum of the second transmission powers of all SRSs or SRS sets included in the at least two SRSs or the at least two SRS sets, $RE(i)$ represents the quantity of REs corresponding to the SRS or SRS set on the i-th CC among the at least two SRSs or SRS sets, and $sum(REs)$ represents the total quantity of REs corresponding to the at least two SRSs or the at least two SRS sets.

In some embodiments, the second transmission powers of the at least two SRSs or the at least two SRS sets are greater than the maximum transmission power limitation.

Optionally, the transmission power of the subcarriers corresponding to the at least two SRSs or the at least two SRS sets is determined based on the maximum transmission power limitation and a total quantity of REs corresponding to the at least two SRSs or the at least two SRS sets.

Optionally, the transmission power of the subcarriers satisfies the following relationship:

$$P_{RE} = \frac{Pcmax}{sum(REs)}$$

where $P_{RE}$ represents the transmission power of the subcarriers, $Pcmax$ represents the maximum transmission power limitation, and $sum(REs)$ represents the total quantity of REs corresponding to the at least two SRSs or the at least two SRS sets.

For example, if the second transmission power of SRS1 is P1, the second transmission power of SRS2 is P2, the second transmission power of SRS3 is P3, the quantity of REs corresponding to SRS1 is 12, the quantity of REs corresponding to SRS2 is 24, the quantity of REs corresponding to SRS3 is 12, and P1 + P2 + P3 > P_CMAX, then

$$P_{RE} = \frac{Pcamx}{12+24+12} = \frac{Pcamx}{48}.$$

Optionally, the first transmission power of each SRS or each SRS set satisfies the following relationship:

$$P_{CC(i)} = \frac{Pcamx}{sum(REs)} \times sum(RE(i))$$

where $P_{CC(i)}$ represents the first transmission power of the SRS or SRS set on the i-th CC among the at least two SRSs or SRS sets, $Pcmax$ represents the maximum transmission power limitation, $RE(i)$ represents the quantity of REs corresponding to the SRS or SRS set on the i-th CC among the at least two SRSs or SRS sets, and $sum(REs)$ represents the total quantity of REs corresponding to the at least two SRSs or the at least two SRS sets.

In some embodiments, the second transmission powers of the at least two SRSs or the at least two SRS sets are less than or equal to the maximum transmission power limitation.

Optionally, the first transmission power of each SRS or each SRS set is determined based on the second transmission power of each SRS or each SRS set.

Optionally, the second transmission power of each SRS or each SRS set may refer to the process of determining the second transmission power of each SRS or each SRS set in the above embodiments, which is not repeated here.

For example, if the at least two SRSs or SRS sets include SRS1 with a second transmission power P1, SRS2 with a second transmission power P2, and SRS3 with a second transmission power P3, and P1 + P2 + P3 ≤ P_CMAX, then the first transmission power of SRS1 is P1, the first transmission power of SRS2 is P2, and the first transmission power of SRS3 is P3.

In some embodiments, the second transmission powers of the at least two SRSs or the at least two SRS sets are greater than the maximum transmission power limitation.

Optionally, the first transmission power of an SRS or an SRS set that satisfies a first rule among the at least two SRSs or the at least two SRS sets is the second transmission power of the SRS or the SRS set.

Optionally, the first transmission power of an SRS or an SRS set that does not satisfy the first rule among the at least two SRSs or the at least two SRS sets is a third transmission power.

Optionally, the third transmission power is a transmission power obtained after performing power back-off on the second transmission power of the SRS or the SRS set that does not satisfy the first rule among the at least two SRSs or the at least two SRS sets.

Optionally, the first rule is used to indicate the priority of the SRS or SRS set.

Optionally, the first rule is that the channel quality of the channel corresponding to the SRS or SRS set is greater than a threshold.

Optionally, the priority of the SRS or SRS set whose channel quality is greater than the threshold is higher than the priority of the SRS or SRS set whose channel quality is not greater than the threshold.

Optionally, the first rule is indicated by the network device.

Optionally, the network device 102 directly indicates the priority of each SRS or each SRS set in the at least two SRSs or the at least two SRS sets.

For example, if the at least two SRSs or SRS sets include two SRSs, namely SRS1 and SRS2, and the network device 102 indicates that the priority of SRS1 is higher than that of SRS2, then the first transmission power of SRS1 is the second transmission power, and the first transmission power of SRS2 is the third transmission power obtained by backing off the second transmission power.

Optionally, the sum of the first transmission power of the SRS or SRS set that satisfies the first rule among the at least two SRSs or the at least two SRS sets and the first transmission power of the SRS or SRS set that does not satisfy the first rule among the at least two SRSs or the at least two SRS sets is less than or equal to the maximum transmission power.

For example, if the first transmission power of the SRS or SRS set that satisfies the first rule among the at least two SRSs or the at least two SRS sets is P1, and the first transmission powers of the SRSs or SRS sets that do not satisfy the first rule are P2 and P3, then P1 + P2 + P3 is less than or equal to $P_{CMAX}$.

In some embodiments, the second transmission powers of the at least two SRSs or the at least two SRS sets are greater than the maximum transmission power limitation.

Optionally, the first transmission power of each SRS or each SRS set in the at least two SRSs or the at least two SRS sets is the same.

For example, if the at least two SRSs or SRS sets include three SRSs, then the first transmission power of each SRS is 3/$P_{CMAX}$.

Optionally, the first transmission power of each SRS or SRS set is determined based on the proportion of the second transmission power of each SRS or SRS set in the maximum transmission power limitation.

For example, if the at least two SRSs or SRS sets include three SRSs, where the second transmission power of SRS1 is P1, the second transmission power of SRS2 is P2, and the second transmission power of SRS3 is P3, then the first transmission power of SRS1 is

$$P_{CC1} = Pcmax \frac{P1}{P1 + P2 + P3}.$$

Step S2103, the terminal 101 sending the SRSs or SRS sets.

In some embodiments, the terminal 101 sends each of the at least two SRSs or each of the at least two SRS sets.

In some embodiments, the terminal 101 sends each of the at least two SRSs.

In some embodiments, the terminal 101 sends each of the at least two SRS sets.

In some embodiments, the transmission power of each SRS or each SRS set sent by the terminal 101 among the at least two SRSs or the at least two SRS sets is the first transmission power of each SRS or each SRS set.

Optionally, the first transmission power of each SRS or each SRS set may refer to the optional implementations of step S2102 in FIG. 2 and other related parts in embodiments associated with FIG. 2, which are not repeated here.

The method for controlling power involved in embodiments of the present invention may include at least one of steps S2101 to S2103. For example, step S2101 may be implemented as an independent embodiment, step S2102 may be implemented as an independent embodiment, step S2103 may be implemented as an independent embodiment, step S2101 + step S2102 may be implemented as an independent embodiment, step S2101 + step S2103 may be implemented as an independent embodiment, step S2102 + step S2103 may be implemented as an independent embodiment, but is not limited thereto.

In some embodiments, steps S2101 and S2102 are optional, and in different embodiments, one or more of these steps may be omitted or replaced.

In some embodiments, steps S2101 and S2103 are optional, and in different embodiments, one or more of these steps may be omitted or replaced.

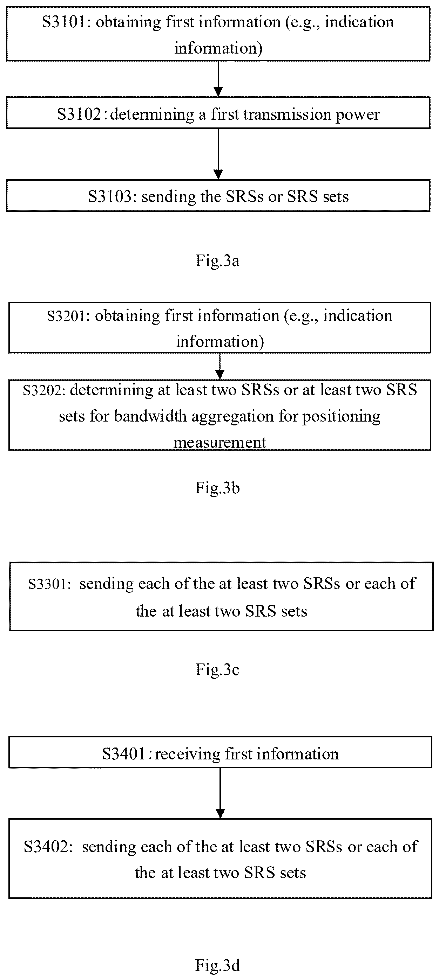

FIG. 3a is a flowchart of a method for controlling power according to an embodiment of the present invention. As shown in FIG. 3a, an embodiment of the present invention relates to a method for controlling power, performed by the terminal 101, where the method includes:

Step S3101, obtaining first information.

The optional implementations of step S3101 may refer to the optional implementations of step S2101 in FIG. 2 and other related parts in embodiments associated with FIG. 2, which are not repeated here.

In some embodiments, the terminal 101 receives the first information from the network device 102, but may also receive the first information from other entities. The first information may indicate the first information, i.e., the first information may indicate a first quantity of beam combinations.

In some embodiments, the terminal 101 obtains the first information specified by a protocol.

In some embodiments, the terminal 101 obtains the first information from an upper layer.

In some embodiments, the terminal 101 performs processing to obtain the first information.

In some embodiments, step S3101 is omitted, and the terminal 101 autonomously determines the first information, i.e., determines the first quantity of beam combinations, or the above function is default or preset.

Step S3102, determining a first transmission power.

The optional implementations of step S3102 may refer to the optional implementations of step S2102 in FIG. 2 and other related parts in the embodiments associated with FIG. 2, which are not repeated here.

In some embodiments, the first uplink reference signal is determined based on the first information received by the terminal 101.

Step S3103, sending the SRSs or SRS sets.

The optional implementations of step S3103 may refer to the optional implementations of step S2103 in FIG. 2 and other related parts in embodiments associated with FIG. 2, which are not repeated here.

The method for controlling power involved in embodiments of the present invention may include at least one of steps S3101 to S3103. For example, step S3102 may be implemented as an independent embodiment, step S3103 may be implemented as an independent embodiment, step S3101 + step S3102 may be implemented as an independent embodiment, step S3101 + step S3103 may be implemented as an independent embodiment, step S3101 + step S3102 + step S3103 may be implemented as an independent embodiment, but is not limited thereto.

In some embodiments, step S3101 is optional, and in different embodiments, this step may be omitted or replaced.

In some embodiments, step S3103 is optional, and in different embodiments, this step may be omitted or replaced.

FIG. 3b is a flowchart of a method for controlling power according to an embodiment of the present invention. As shown in FIG. 3b, an embodiment of the present invention relates to a method for controlling power, performed by the terminal 101, where the method includes:

Step S3201, obtaining first information.

The optional implementations of step S3201 may refer to step S2101 in FIG. 2 and other related parts in embodiments associated with FIG. 2. In optional embodiments, the optional implementations of step S3201 may refer to step S3101 in FIG. 3a and other related parts in embodiments associated with FIG. 3a, which are not repeated here.

Step S3202, determining at least two SRSs or at least two SRS sets for bandwidth aggregation for positioning measurement.

The optional implementations of step S3202 may refer to step S2101 in FIG. 2 and other related parts in embodiments associated with FIG. 2. In optional embodiments, the optional implementations of step S3202 may refer to step S3101 in FIG. 3a and other related parts in embodiments associated with FIG. 3a, which are not repeated here.

The method for controlling power involved in embodiments of the present invention may include at least one of steps S3101 to S3102. For example, step S3102 may be implemented as an independent embodiment, step S3101 + step S3102 may be implemented as an independent embodiment, but is not limited thereto.

In some embodiments, step S3101 is optional, and in different embodiments, this step may be omitted or replaced.

FIG. 3c is a flowchart of a method for controlling power according to an embodiment of the present invention. As shown in FIG. 3c, an embodiment of the present invention relates to a method for controlling power, performed by the terminal 101, where the method includes:

Step S3301, sending each of the at least two SRSs or each of the at least two SRS sets.

The optional implementations of step S3301 may refer to step S2103 in FIG. 2 and other related parts in embodiments associated with FIG. 2. In optional embodiments, the optional implementations of step S3201 may refer to step S3103 in FIG. 3a and other related parts in embodiments associated with FIG. 3a, which are not repeated here.

FIG. 3d is a flowchart of a method for controlling power according to an embodiment of the present invention. As shown in FIG. 3d, an embodiment of the present invention relates to a method for controlling power, performed by the terminal 101, where the method includes:

Step S3401, receiving first information.

The optional implementations of step S3401 may refer to step S2101 in FIG. 2 and other related parts in embodiments associated with FIG. 2. In optional embodiments, the optional implementations of step S3401 may refer to step S3101 in FIG. 3a and other related parts in embodiments associated with FIG. 3a, which are not repeated here.

In some embodiments, the first information is used to determine at least two SRSs or at least two SRS sets for bandwidth aggregation for positioning measurement.

In some embodiments, the first information is used to indicate identifiers of the at least two SRSs or the at least two SRS sets.

In some embodiments, the first information is used to indicate one or more lists, where the one or more lists include the at least two SRSs or the at least two SRS sets.

In optional embodiments, the optional implementations of step S3201 may refer to step S2101 in FIG. 2 and other related parts in embodiments associated with FIG. 2. In optional embodiments, the optional implementations of step S3201 may refer to step S3101 in FIG. 3a and other related parts in embodiments associated with FIG. 3a, which are not repeated here.

Step S3402, sending each of the at least two SRSs or each of the at least two SRS sets.

The optional implementations of step S3402 may refer to step S2103 in FIG. 2 and other related parts in embodiments associated with FIG. 2. In optional embodiments, the optional implementations of step S3402 may refer to step S3103 in FIG. 3a and other related parts in embodiments associated with FIG. 3a, which are not repeated here.

In some embodiments, the transmission power of each SRS or each SRS set is a first transmission power.

The first transmission power of each SRS or each SRS set is determined based on at least one of:

transmission powers of subcarriers corresponding respectively to the at least two SRSs or the at least two SRS sets;
resource element (RE) quantities corresponding respectively to the at least two SRSs or the at least two SRS sets;
a maximum transmission power limitation;
second transmission powers corresponding respectively to the at least two SRSs or the at least two SRS sets;
where the second transmission powers are determined based on power control parameters.

In some embodiments, the first transmission powers corresponding respectively to the at least two SRSs or the at least two SRS sets are determined based on the transmission powers of the subcarriers corresponding respectively to the at least two SRSs or the at least two SRS sets and the RE quantities corresponding respectively to the at least two SRSs or the at least two SRS sets, and the transmission powers of the subcarriers corresponding respectively to the at least two SRSs or the at least two SRS sets are the same.

In some embodiments, the second transmission powers of the at least two SRSs or the at least two SRS sets are less than or equal to the maximum transmission power limitation, and the transmission powers of the subcarriers corresponding respectively to the at least two SRSs or the at least two SRS sets are determined based on the second transmission power of each of the at least two SRSs or each of the at least two SRS sets and a total of REs of the at least two SRSs or the at least two SRS sets.

In some embodiments, the second transmission powers of the at least two SRSs or the at least two SRS sets are greater than the maximum transmission power limitation, and the transmission powers of the subcarriers corresponding respectively to the at least two SRSs or the at least two SRS sets are determined based on the maximum transmission power limitation and a total of REs of the at least two SRSs or the at least two SRS sets.

In some embodiments, the second transmission powers of the at least two SRSs or the at least two SRS sets are greater than the maximum transmission power limitation, a first transmission power of an SRS or an SRS set that satisfies a first rule among the at least two SRSs or the at least two SRS sets is a second transmission power of the SRS or the SRS set that satisfies the first rule, and a first transmission power of the SRS or the SRS set that does not satisfy the first rule among the at least two SRSs or the at least two SRS sets is a third transmission power; where the third transmission power is a transmission power obtained after performing a power back-off on the second transmission power of the SRS or the SRS set that does not satisfy the first rule among the at least two SRSs or the at least two SRS sets.

In some embodiments, the first rule is that a channel quality of a channel corresponding to the SRS or the SRS set is greater than a threshold; or the first rule is indicated by a network device.

In some embodiments, a sum of the first transmission power of the SRS or the SRS set that satisfies the first rule among the at least two SRSs or the at least two SRS sets and the first transmission power of the SRS or the SRS set that does not satisfy the first rule among the at least two SRSs or the at least two SRS sets is less than or equal to the maximum transmission power.

In some embodiments, the second transmission powers of the at least two SRSs or the at least two SRS sets are greater than the maximum transmission power limitation, and the first transmission powers corresponding respectively to the at least two SRSs or the at least two SRS sets are the same; or each of the first transmission powers corresponding respectively to the at least two SRSs or the at least two SRS sets is determined based on a proportion of the respective second transmission power of the SRS or the SRS set in the maximum transmission power limitation.

In optional embodiments, the optional implementations of step S3402 may refer to step S2102 in FIG. 2 and other related parts in embodiments associated with FIG. 2. In optional embodiments, the optional implementations of step S3402 may refer to step S3102 in FIG. 3a and other related parts in embodiments associated with FIG. 3a, which are not repeated here.

The method for controlling power involved in embodiments of the present invention may include at least one of steps S3401 to S3402. For example, step S3401 may be implemented as an independent embodiment, step S3402 may be implemented as an independent embodiment, but is not limited thereto.

In some embodiments, step S3401 is optional, and in different embodiments, this step may be omitted or replaced.

In embodiments of the present invention, step S3401 may be combined with step S3102 in FIG. 3a, and step S3402 may be combined with step S3202 in FIG. 3a, but is not limited thereto.

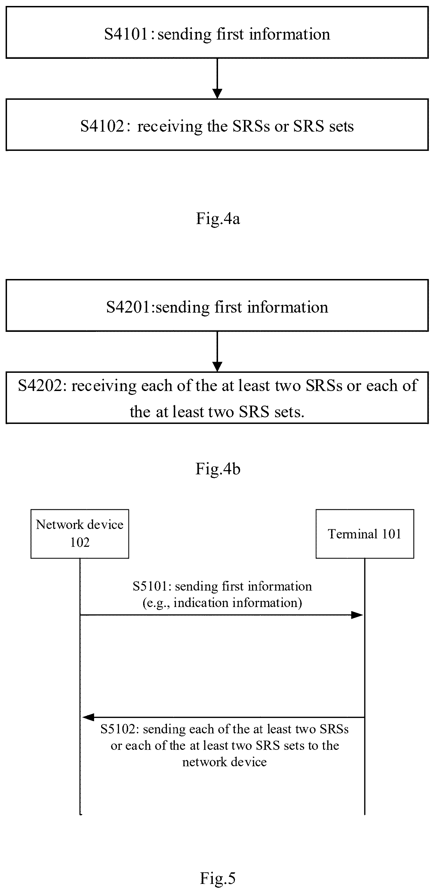

FIG. 4a is a flowchart of a method for controlling power according to an embodiment of the present invention. As shown in FIG. 4a, an embodiment of the present invention relates to a method for controlling power, performed by the network device 102, where the method includes:

Step S4101, sending first information.

The optional implementations of step S4101 may refer to the optional implementations of step S2101 in FIG. 2 and other related parts in embodiments associated with FIG. 2, which are not repeated here.

In some embodiments, the network device 102 sends the first information to the terminal 101, but is not limited thereto, and may also send the first information to other entities.

Step S4102, receiving the SRSs or SRS sets.

The optional implementations of step S4102 may refer to the optional implementations of step S2103 in FIG. 2 and other related parts in embodiments associated with FIG. 2, which are not repeated here.

The method for controlling power involved in embodiments of the present invention may include at least one of steps S4101 to S4102. For example, step S4101 may be implemented as an independent embodiment, step S4102 may be implemented as an independent embodiment, step S4101 + step S4102 may be implemented as an independent embodiment, but is not limited thereto.

In some embodiments, step S4101 is optional, and in different embodiments, this step may be omitted or replaced.

In some embodiments, step S4102 is optional, and in different embodiments, this step may be omitted or replaced.

FIG. 4b is a flowchart of a method for controlling power according to an embodiment of the present invention. As shown in FIG. 4b, an embodiment of the present invention relates to a method for controlling power, performed by the network device 102, where the method includes:

Step S4201, sending first information.

The optional implementations of step S4201 may refer to step S2101 in FIG. 2 and other related parts in embodiments associated with FIG. 2. In optional embodiments, the optional implementations of step S4201 may refer to step S4101 in FIG. 4a and other related parts in embodiments associated with FIG. 4, which are not repeated here.

In some embodiments, the first information is used to determine at least two SRSs or at least two SRS sets for bandwidth aggregation for positioning measurement.

In some embodiments, the first information is used to indicate identifiers of the at least two SRSs or the at least two SRS sets.

In some embodiments, the first information is used to indicate one or more lists, where the one or more lists include the at least two SRSs or the at least two SRS sets.

Step S4202, receiving each of the at least two SRSs or each of the at least two SRS sets.

The optional implementations of step S4202 may refer to step S2103 in FIG. 2 and other related parts in embodiments associated with FIG. 2. In optional embodiments, the optional implementations of step S4202 may refer to step S4102 in FIG. 4a and other related parts in embodiments associated with FIG. 4, which are not repeated here.

In some embodiments, the transmission power of each SRS or each SRS set is a first transmission power.

The first transmission power of each SRS or each SRS set is determined based on at least one of:

transmission powers of subcarriers corresponding respectively to the at least two SRSs or the at least two SRS sets;
resource element (RE) quantities corresponding respectively to the at least two SRSs or the at least two SRS sets;
a maximum transmission power limitation;
second transmission powers corresponding respectively to the at least two SRSs or the at least two SRS sets;
the second transmission powers are determined based on power control parameters.

In some embodiments, the first transmission powers corresponding respectively to the at least two SRSs or the at least two SRS sets are determined based on the transmission powers of the subcarriers corresponding respectively to the at least two SRSs or the at least two SRS sets and the RE quantities corresponding respectively to the at least two SRSs or the at least two SRS sets, and the transmission powers of the subcarriers corresponding respectively to the at least two SRSs or the at least two SRS sets are the same.

In some embodiments, the second transmission powers of the at least two SRSs or the at least two SRS sets are less than or equal to the maximum transmission power limitation, and the transmission powers of the subcarriers corresponding respectively to the at least two SRSs or the at least two SRS sets are determined based on the sum of the a second transmission power of each of the at least two SRSs or each of the at least two SRS sets and a total of REs of the at least two SRSs or the at least two SRS sets.

In some embodiments, the second transmission powers of the at least two SRSs or the at least two SRS sets are greater than the maximum transmission power limitation, and the transmission powers of the subcarriers corresponding respectively to the at least two SRSs or the at least two SRS sets are determined based on the maximum transmission power limitation and a total of REs of the at least two SRSs or the at least two SRS sets.

In some embodiments, the second transmission powers of the at least two SRSs or the at least two SRS sets are greater than the maximum transmission power limitation, a first transmission power of an SRS or an SRS set that satisfies a first rule among the at least two SRSs or the at least two SRS sets is a second transmission power of the SRS or the SRS set that satisfies the first rule, and a first transmission power of the SRS or the SRS set that does not satisfy the first rule among the at least two SRSs or the at least two SRS sets is a third transmission power; where the third transmission power is a transmission power obtained after performing a power back-off on the second transmission power of the SRS or the SRS set that does not satisfy the first rule among the at least two SRSs or the at least two SRS sets.

In some embodiments, the first rule is that a channel quality of a channel corresponding to the SRS or the SRS set is greater than a threshold; or the first rule is indicated by a network device.

In some embodiments, a sum of the first transmission power of the SRS or the SRS set that satisfies the first rule among the at least two SRSs or the at least two SRS sets and the first transmission power of the SRS or the SRS set that does not satisfy the first rule among the at least two SRSs or the at least two SRS sets is less than or equal to the maximum transmission power.

In some embodiments, the second transmission powers of the at least two SRSs or the at least two SRS sets are greater than the maximum transmission power limitation, and the first transmission powers corresponding respectively to the at least two SRSs or the at least two SRS sets are the same; or each of the first transmission powers corresponding respectively to the at least two SRSs or the at least two SRS sets is determined based on a proportion of the respective second transmission power of the SRS or the SRS set in the maximum transmission power limitation.

In optional embodiments, the optional implementations of step S4202 may refer to step S2102 in FIG. 2 and other related parts in embodiments associated with FIG. 2. In optional embodiments, the optional implementations of step S4202 may refer to step S3102 in FIG. 3a and other related parts in embodiments associated with FIG. 3a, which are not repeated here.

The method for controlling power involved in embodiments of the present invention may include at least one of steps S3401 to S3402. For example, step S4201 may be implemented as an independent embodiment, step S4202 may be implemented as an independent embodiment, but is not limited thereto.

In some embodiments, step S4201 is optional, and in different embodiments, this step may be omitted or replaced.

In embodiments of the present invention, step S4202 may be combined with step S3101 in FIG. 4a, but is not limited thereto.

FIG. 5 is a flowchart of a method for controlling power according to an embodiment of the present invention. As shown in FIG. 5, an embodiment of the present invention relates to a method for controlling power, used in a communication system 100, where the method includes:

Step S5101, the network device 102 sending first information to the terminal 101.

The optional implementations of step S5101 may refer to the optional implementations of step S2101 in FIG. 2 and other related parts in embodiments associated with FIG. 2. The optional implementations of step S5101 may refer to the optional implementations of step S4101 in FIG. 4a and other related parts in embodiments associated with FIG. 4a. The optional implementations of step S5101 may refer to the optional implementations of step S4201 in FIG. 4b and other related parts in embodiments associated with FIG. 4b.

Step S5102, the terminal 101 sending each of the at least two SRSs or each of the at least two SRS sets to the network device 102.

In some embodiments, the transmission power of each SRS or each SRS set is a first transmission power.

The optional implementations of step S5102 may refer to the optional implementations of step S2102 in FIG. 2 and other related parts in embodiments associated with FIG. 2. The optional implementations of step S5102 may refer to the optional implementations of step S3102 in FIG. 3a and other related parts in embodiments associated with FIG. 3a. The optional implementations of step S5102 may refer to the optional implementations of step S3202 in FIG. 3b and other related parts in embodiments associated with FIG. 3b.

In some embodiments, the above method may include the methods described in the above embodiments related to the communication system 100, the terminal 101, the network device 102, etc., which are not repeated here.

Embodiments of the present invention also provide a method for controlling power, as described below:

Method 1: Ensure that the transmission power of each resource element (RE) is the same.

In some embodiments, receive indication information from the network to determine which SRSs or SRS sets are the sounding reference signals (SRSs) or SRS sets that need to be aggregated.

Optionally, indication method 1: configure an identifier (link ID) for each SRS or SRS set, and SRSs with the same link ID are SRSs that need to be aggregated.

Optionally, indication method 2: configure different positioning sounding reference signal lists (SRS-pos set lists), and the SRSs or SRS sets in the list are SRSs or SRS sets that need to be aggregated.

In some embodiments, determine the transmission power of the SRSs or SRS sets that need to be aggregated: configure respective power control parameters for each SRS or SRS set, and determine the transmission power of the SRS or SRS set on each component carrier (CC) according to the existing formula. Assume that the transmission powers of CC1, CC2, and CC3 determined according to the respective power control parameters are P1, P2, and P3.

Optionally, if $(P1 + P2 + P3) \leq$ maximum transmission power ($P_{CMAX}$), then the total transmission power is P1 + P2 + P3, and the transmission power per subcarrier $P_{RE}$ of the aggregated SRSs is (P1 + P2 + P3) / sum(REs in all CCs). To ensure the transmission power per subcarrier, when mapping the SRSs on each CC to physical resources, the weighting coefficient $\beta$ for each RE symbol must be the same, and the value of $\beta$ must ensure that the total transmission power is (P1 + P2 + P3). Actually, the transmission power on CC1 is $Pcc1 = P_{RE} \times Sum(REs\ in\ CC1)$ in CC1, and the actual transmission power on other CCs is similar.

Optionally, if $(P1 + P2 + P3) > P_{CMAX}$, then the total transmission power is $P_{CMAX}$. Then the transmission power per subcarrier $P_{RE}$ of the aggregated SRSs is $P_{CMAX}$ / sum(REs in all CCs). When mapping the SRSs or SRS sets on each CC to physical resources, the weighting coefficient $\beta$ for each RE symbol must be the same and must ensure that the total transmission power is $P_{CMAX}$. The actual transmission power of the SRSs or SRS sets on each CC is the transmission power per subcarrier multiplied by the number of REs.

Method 2: Do not consider that the power per RE is the same.

In some embodiments, receive indication information from the network to determine which SRSs or SRS sets are the SRSs or SRS sets that need to be aggregated.

Optionally, the indication method is the same as in method 1.

In some embodiments, determine the transmission power of the SRSs or SRS sets that need to be aggregated: determine the transmission power of the SRS or SRS set on each CC according to the respective power control parameters configured for each SRS or SRS set. Assume that the transmission powers of CC1, CC2, and CC3 determined according to the respective power control parameters are P1, P2, and P3.

Optionally, if $(P1 + P2 + P3) > P_{CMAX}$.

Optionally, ensure the transmission of the SRS or SRS set on the member carrier with better channel quality, and perform power back-off on the SRSs or SRS sets on other CCs.

Optionally, each CC shares $P_{CMAX}$ equally, or shares $P_{CMAX}$ proportionally. The proportion may be determined according to the desired P1, P2, P3. For example, the actual transmission power of CC1 is $P_{CMAX}$ * P1 / (P1 + P2 + P3).

In embodiments of the present invention, each step may be implemented as an independent embodiment. Part or all of the steps and their optional implementations may be arbitrarily combined with part or all of the steps of other embodiments, and may also be arbitrarily combined with the optional implementations of other embodiments.

Embodiments of the present invention also provide an apparatus for implementing any of the above methods. For example, an apparatus is provided, which includes units or modules for performing the steps executed by the terminal in any of the above methods. Another example, another apparatus is provided, which includes units or modules for performing the steps executed by a network device (e.g., an access network device, a core network function node, a core network device, etc.) in any of the above methods.

It should be understood that the division of units or modules in the above apparatus is only a division of logical functions. In actual implementation, they may be fully or partially integrated into one physical entity, or may be physically separated. In addition, the units or modules in the apparatus may be implemented in the form of software called by a processor: for example, the apparatus includes a processor, the processor is connected to a memory, the memory stores instructions, and the processor calls the instructions stored in the memory to implement any of the above methods or to implement the functions of the units or modules of the above apparatus. The processor may be, for example, a general-purpose processor, such as a central processing unit (CPU) or a microprocessor, and the memory may be a memory inside the apparatus or a memory outside the apparatus. Alternatively, the units or modules in the apparatus may be implemented in the form of a hardware circuit. The functions of some or all of the units or modules may be implemented by designing the hardware circuit. The hardware circuit may be understood as one or more processors. For example, in one implementation, the hardware circuit is an application-specific integrated circuit (ASIC), and the functions of some or all of the units or modules are implemented by designing the logical relationships of the components in the circuit. In another implementation, the hardware circuit may be implemented by a programmable logic device (PLD). Taking a field programmable gate array (FPGA) as an example, it may include a large number of logic gate circuits, and the connection relationships between the logic gate circuits are configured by configuration files, thereby implementing the functions of some or all of the units or modules. All units or modules of the above apparatus may be implemented entirely in the form of software called by a processor, or entirely in the form of a hardware circuit, or partly in the form of software called by a processor and the remaining part in the form of a hardware circuit.

In embodiments of the present invention, a processor is a circuit with signal processing capability. In one implementation, the processor may be a circuit with the ability to read and run instructions, such as a central processing unit (CPU), a microprocessor, a graphics processing unit (GPU) (which may be understood as a microprocessor), or a digital signal processor (DSP), etc. In another implementation, the processor may implement certain functions through the logical relationships of hardware circuits. The logical relationships of the hardware circuits are fixed or reconfigurable. For example, the processor is a hardware circuit implemented by an application-specific integrated circuit (ASIC) or a programmable logic device (PLD), such as an FPGA. In a reconfigurable hardware circuit, the process of the processor loading a configuration document to implement the configuration of the hardware circuit may be understood as the process of the processor loading instructions to implement the functions of some or all of the units or modules. In addition, it may also be a hardware circuit designed for artificial intelligence, which may be understood as an ASIC, such as a neural network processing unit (NPU), a tensor processing unit (TPU), a deep learning processing unit (DPU), etc.

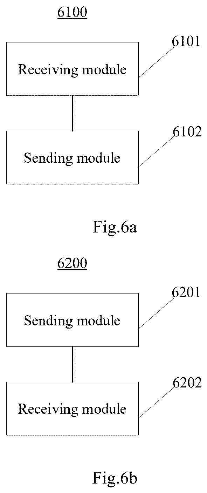

FIG. 6a is a schematic structural diagram of a first power control apparatus according to an embodiment of the present invention. As shown in FIG. 6a, the first power control apparatus 6100 includes: a receiving module 6101, configured to receive first information, where the first information is used to determine at least two sounding reference signals (SRSs) or at least two SRS sets for bandwidth aggregation for positioning measurement; and a sending module 6102, configured to send each of the at least two SRSs or each of the at least two SRS sets, where a transmission power of each SRS or each SRS set is a first transmission power. Optionally, the receiving module is used to perform the steps related to reception executed by the terminal 101 in any of the above methods, and the sending module is used to perform the steps related to sending executed by the terminal 101 in any of the above methods, which are not repeated here. Optionally, the first power control apparatus further includes a processing module, where the processing module is used to perform the steps related to processing executed by the terminal 101 in any of the above methods, which are not repeated here.

FIG. 6b is a schematic structural diagram of a second power control apparatus according to an embodiment of the present invention. As shown in FIG. 6b, the second power control apparatus 6200 includes: a sending module 6201, configured to send first information, where the first information is used to indicate at least two sounding reference signals (SRSs) or at least two SRS sets for bandwidth aggregation for positioning measurement; and a receiving module 6202, configured to receive each of the at least two SRSs or each of the at least two SRS sets, where transmission powers corresponding respectively to the at least two SRSs or the at least two SRS sets are first transmission powers. Optionally, the sending module is used to perform the steps related to sending executed by the network device 102 in any of the above methods, and the receiving module is used to perform the steps related to reception executed by the network device 102 in any of the above methods, which are not repeated here. Optionally, the second power control apparatus further includes a processing module, where the processing module is used to perform the steps related to processing executed by the network device 102 in any of the above methods, which are not repeated here.

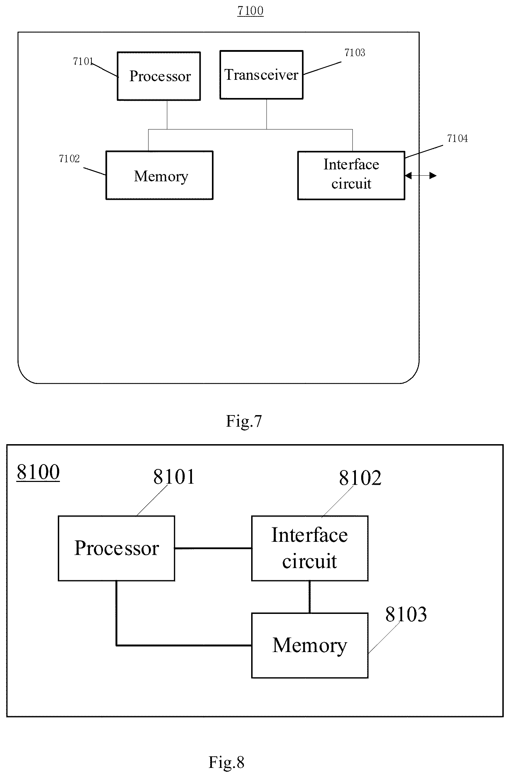

FIG. 7 is a schematic structural diagram of a communication device 7100 according to an embodiment of the present invention. The communication device 7100 may be a network device (e.g., an access network device, a core network device, etc.), may also be a terminal (e.g., a user equipment, etc.), may also be a chip, chip system, or processor that supports the network device to implement any of the above methods, and may also be a chip, chip system, or processor that supports the terminal to implement any of the above methods. The communication device 7100 may be used to implement the methods described in the above method embodiments. For details, refer to the descriptions in the above method embodiments.

As shown in FIG. 7, the communication device 7100 includes one or more processors 7101. The processor 7101 may be a general-purpose processor or a special-purpose processor, etc., for example, a baseband processor or a central processing unit. The baseband processor may be used to process communication protocols and communication data. The central processing unit may be used to control the communication device (e.g., a base station, a baseband chip, a terminal device, a terminal device chip, a DU, or a CU, etc.), execute programs, and process program data. The processor 7101 is configured to invoke instructions to cause the communication device 7100 to perform any of the above methods.

In some embodiments, the communication device 7100 further includes one or more memories 7102 for storing instructions. Optionally, all or part of the memory 7102 may also be outside the communication device 7100.

In some embodiments, the communication device 7100 further includes one or more transceivers 7103. When the communication device 7100 includes one or more transceivers 7103, the communication steps such as sending and receiving in the above methods are performed by the transceiver 7103, and other steps are performed by the processor 7101.

In some embodiments, the transceiver may include a receiver and a transmitter. The receiver and the transmitter may be separate or integrated together. Optionally, terms such as transceiver, transceiver unit, transceiver, transceiver circuit, etc., may be used interchangeably. Terms such as transmitter, transmitter unit, transmitter, transmitter circuit, etc.,

may be used interchangeably. Terms such as receiver, receiver unit, receiver, receiver circuit, etc., may be used interchangeably.

Optionally, the communication device 7100 further includes one or more interface circuits 7104. The interface circuit 7104 is connected to the memory 7102. The interface circuit 7104 may be used to receive signals from the memory 7102 or other devices, and may be used to send signals to the memory 7102 or other devices. For example, the interface circuit 7104 may read instructions stored in the memory 7102 and send the instructions to the processor 7101.

The communication device 7100 in the above embodiment description may be a network device or a terminal, but the scope of the communication device 7100 described in the present invention is not limited thereto. The structure of the communication device 7100 may not be limited by FIG. 7. The communication device may be an independent device or part of a larger device. For example, the communication device may be: 1) an independent integrated circuit (IC), or chip, or chip system or subsystem; (2) a set of one or more ICs, optionally, the set of ICs may also include storage components for storing data and programs; (3) an ASIC, such as a modem (Modem); (4) a module that can be embedded in other devices; (5) a receiver, terminal device, smart terminal device, cellular phone, wireless device, handset, mobile unit, vehicle-mounted device, network device, cloud device, artificial intelligence device, etc.; (6) others, etc.

FIG. 8 is a schematic structural diagram of a chip 8100 according to an embodiment of the present invention. For the case where the communication device 7100 may be a chip or chip system, refer to the schematic structural diagram of the chip 8100 shown in FIG. 8, but it is not limited thereto.

The chip 8100 includes one or more processors 8101. The processor 8101 is configured to invoke instructions to cause the chip 8100 to perform any of the above methods.

In some embodiments, the chip 8100 further includes one or more interface circuits 8102. The interface circuit 8102 is connected to the memory 8103. The interface circuit 8102 may be used to receive signals from the memory 8103 or other devices, and may be used to send signals to the memory 8103 or other devices. For example, the interface circuit 8102 may read instructions stored in the memory 8103 and send the instructions to the processor 8101. Optionally, terms such as interface circuit, interface, transceiver pin, transceiver, etc., may be used interchangeably.

In some embodiments, the chip 8100 further includes one or more memories 8103 for storing instructions. Optionally, all or part of the memory 8103 may be outside the chip 8100.

The present invention also provides a storage medium. The storage medium stores instructions. When the instructions are run on the communication device 7100, the communication device 7100 is caused to perform any of the above methods. Optionally, the storage medium is an electronic storage medium. Optionally, the storage medium is a computer-readable storage medium, but is not limited thereto, and it may also be a storage medium readable by other devices. Optionally, the storage medium may be a non-transitory storage medium, but is not limited thereto, and it may also be a transitory storage medium.

The present invention also provides a program product. When the program product is executed by the communication device 7100, the communication device 7100 is caused to perform any of the above methods. Optionally, the program product is a computer program product.

The present invention also provides a computer program. When run on a computer, the computer is caused to perform any of the above methods.

**Claims**

1. A method for controlling power, performed by a terminal, comprising:

   receiving first information, wherein the first information is used to determine at least two sounding reference signals (SRSs) or at least two SRS sets for bandwidth aggregation for positioning measurement; and
   sending each of the at least two SRSs or each of the at least two SRS sets, wherein transmission powers corresponding respectively to the at least two SRSs or the at least two SRS sets are first transmission powers.

2. The method according to claim 1, wherein the first transmission powers corresponding respectively to the at least two SRSs or the at least two SRS sets are determined based on at least one of:

   transmission powers of subcarriers corresponding respectively to the at least two SRSs or the at least two SRS sets;
   resource element (RE) quantities corresponding respectively to the at least two SRSs or the at least two SRS sets;
   a maximum transmission power limitation; or
   a second transmission power of each of the at least two SRSs or each of the at least two SRS sets;
   wherein the second transmission power is determined based on a power control parameter.

3. The method according to claim 2, wherein the first transmission powers corresponding respectively to the at least two SRSs or the at least two SRS sets are determined based on the transmission powers of the subcarriers corresponding respectively to the at least two SRSs or the at least two SRS sets and the RE quantities corresponding respectively to the at least two SRSs or the at least two SRS sets, and the transmission powers of the subcarriers corresponding respectively to the at least two SRSs or the at least two SRS sets are the same.

4. The method according to claim 3, wherein the second transmission powers of the at least two SRSs or the at least two SRS sets are less than or equal to the maximum transmission power limitation, and the transmission powers of the subcarriers corresponding respectively to the at least two SRSs or the at least two SRS sets are determined based on the second transmission power of each of the at least two SRSs or each of the at least two SRS sets and a total of REs of the at least two SRSs or the at least two SRS sets.

5. The method according to claim 3, wherein the second transmission powers of the at least two SRSs or the at least two SRS sets are greater than the maximum transmission power limitation, and the transmission powers of the subcarriers corresponding respectively to the at least two SRSs or the at least two SRS sets are determined based on the maximum transmission power limitation and a total of REs of the at least two SRSs or the at least two SRS sets.

6. The method according to claim 2, wherein the second transmission powers of the at least two SRSs or the at least two SRS sets are greater than the maximum transmission power limitation, a first transmission power of an SRS or an SRS set that satisfies a first rule among the at least two SRSs or the at least two SRS sets is a second transmission power of the SRS or the SRS set that satisfies the first rule, and a first transmission power of the SRS or the SRS set that does not satisfy the first rule among the at least two SRSs or the at least two SRS sets is a third transmission power; wherein the third transmission power is a transmission power obtained after performing a power back-off on the second transmission power of the SRS or the SRS set that does not satisfy the first rule among the at least two SRSs or the at least two SRS sets.

7. The method according to claim 6, wherein the first rule is that a channel quality of a channel corresponding to SRS or SRS set is greater than a threshold; or
the first rule is indicated by a network device.

8. The method according to claim 7, wherein a sum of the first transmission power of the SRS or the SRS set that satisfies the first rule among the at least two SRSs or the at least two SRS sets and the first transmission power of the SRS or the SRS set that does not satisfy the first rule among the at least two SRSs or the at least two SRS sets is less than or equal to the maximum transmission power.

9. The method according to claim 2, wherein the second transmission powers of the at least two SRSs or the at least two SRS sets are greater than the maximum transmission power limitation, and the first transmission powers corresponding respectively to the at least two SRSs or the at least two SRS sets are the same; or
each of the first transmission powers corresponding respectively to the at least two SRSs or the at least two SRS sets is determined based on a proportion of the respective second transmission power of the SRS or the SRS set in the maximum transmission power limitation.

10. The method according to any one of claims 1 to 9, wherein the first information is used to indicate identifiers of the at least two SRSs or the at least two SRS sets.

11. The method according to claim 10, wherein the identifiers of the at least two SRSs or the at least two SRS sets are the same.

12. The method according to any one of claims 1 to 9, wherein the first information is used to indicate one or more SRS lists, wherein the one or more SRS lists comprise the at least two SRSs or the at least two SRS sets.

13. A method for controlling power, performed by a network device, comprising:

sending first information, wherein the first information is used to determine at least two sounding reference signals (SRSs) or at least two SRS sets for bandwidth aggregation for positioning measurement; and
receiving each of the at least two SRSs or each of the at least two SRS sets, wherein transmission powers corresponding respectively to the at least two SRSs or the at least two SRS sets are first transmission powers.

14. The method according to claim 13, wherein the first transmission powers corresponding respectively to the at least two SRSs or the at least two SRS sets are determined based on at least one of:

transmission powers of subcarriers corresponding respectively to the at least two SRSs or the at least two SRS sets;
resource element (RE) quantities corresponding respectively to the at least two SRSs or the at least two SRS sets;
a maximum transmission power limitation; or
a second transmission power of each of the at least two SRSs or each of the at least two SRS sets;
wherein the second transmission power is determined based on a power control parameter.

15. The method according to claim 14, wherein the first transmission powers corresponding respectively to the at least two SRSs or the at least two SRS sets are determined based on the transmission powers of the subcarriers corresponding respectively to the at least two SRSs or the at least two SRS sets and the RE quantities corresponding respectively to the at least two SRSs or the at least two SRS sets, and the transmission powers of the subcarriers corresponding respectively to the at least two SRSs or the at least two SRS sets are the same.

16. The method according to claim 15, wherein the second transmission powers of the at least two SRSs or the at least two SRS sets are less than or equal to the maximum transmission power limitation, and the transmission powers of the subcarriers corresponding respectively to the at least two SRSs or the at least two SRS sets are determined based on the second transmission power of each of the at least two SRSs or each of the at least two SRS sets and a total of REs of the at least two SRSs or the at least two SRS sets.

17. The method according to claim 15, wherein the second transmission powers of the at least two SRSs or the at least two SRS sets are greater than the maximum transmission power limitation, and the transmission powers of the subcarriers corresponding respectively to the at least two SRSs or the at least two SRS sets are determined based on the maximum transmission power limitation and a total of REs of the at least two SRSs or the at least two SRS sets.

18. The method according to claim 14, wherein the second transmission powers of the at least two SRSs or the at least two SRS sets are greater than the maximum transmission power limitation, a first transmission power of an SRS or an SRS set that satisfies a first rule among the at least two SRSs or the at least two SRS sets is a second transmission power of the SRS or the SRS set that satisfies the first rule, and a first transmission power of the SRS or the SRS set that does not satisfy the first rule among the at least two SRSs or the at least two SRS sets is a third transmission power;
wherein the third transmission power is a transmission power obtained after performing a power back-off on the second transmission power of the SRS or the SRS set that does not satisfy the first rule among the at least two SRSs or the at least two SRS sets.

19. The method according to claim 18, wherein the first rule is that a channel quality of a channel corresponding to SRS or SRS set is greater than a threshold; or
the first rule is indicated by a network device.

20. The method according to claim 19, wherein a sum of the first transmission power of the SRS or the SRS set that satisfies the first rule among the at least two SRSs or the at least two SRS sets and the first transmission power of the SRS or the SRS set that does not satisfy the first rule among the at least two SRSs or the at least two SRS sets is less than or equal to the maximum transmission power.

21. The method according to claim 14, wherein the second transmission powers of the at least two SRSs or the at least two SRS sets are greater than the maximum transmission power limitation, and the first transmission powers corresponding respectively to the at least two SRSs or the at least two SRS sets are the same; or
each of the first transmission powers corresponding respectively to the at least two SRSs or the at least two SRS sets is determined based on a proportion of the respective second transmission power of the SRS or the SRS set in the maximum transmission power limitation.

22. The method according to any one of claims 13 to 21, wherein the first information is used to indicate identifiers of the at least two SRSs or the at least two SRS sets.

23. The method according to claim 22, wherein the identifiers of the at least two SRSs or the at least two SRS sets are the same.

24. The method according to any one of claims 13 to 21, wherein the first information is used to indicate one or more SRS lists, wherein the one or more SRS lists comprise the at least two SRSs or the at least two SRS sets.

25. A method for controlling power, performed by a communication system, comprising:

sending, by a network device, first information to a terminal, wherein the first information is used to determine at least two sounding reference signals (SRSs) or at least two SRS sets for bandwidth aggregation for positioning measurement; and
sending to the network device, by the terminal, each of the at least two SRSs or each of the at least two SRS sets, wherein transmission powers corresponding respectively to the at least two SRSs or the at least two SRS sets are first transmission powers.

26. A first apparatus for controlling power, comprising:

a receiving module configured to receive first information, wherein the first information is used to determine at least two sounding reference signals (SRSs) or at least two SRS sets for bandwidth aggregation for positioning measurement; and
a sending module configured to send each of the at least two SRSs or each of the at least two SRS sets, wherein transmission powers corresponding respectively to the at least two SRSs or the at least two SRS sets are first transmission powers.

27. A second apparatus for controlling power, comprising:

a sending module, configured to send first information, wherein the first information is used to determine at least two sounding reference signals (SRSs) or at least two SRS sets for bandwidth aggregation for positioning measurement; and
a receiving module, configured to receive each of the at least two SRSs or each of the at least two SRS sets, wherein transmission powers corresponding respectively to the at least two SRSs or the at least two SRS sets are first transmission powers.

28. A communication device, comprising:

one or more processors;
wherein the one or more processors are configured to invoke instructions to cause the communication device to perform the method for controlling power according to any one of claims 1-12 or 13-24.

29. A communication system, comprising a terminal and a network device, wherein the terminal is configured to perform the method for controlling power according to any one of claims 1-12, and the network device is configured to perform the method for controlling power according to any one of claims 13-24.

30. A storage medium having stored therein instructions that, when run on a communication device, cause the communication device to perform the method for controlling power according to any one of claims 1-12 or 13-24.

communication
system **100**

terminal 101 ——— network device
102

Fig.1a

SRS set1    SRS set2

**CC1**

SRS set3    SRS set4

**CC2**

Fig.1b

Network device
102                              Terminal 101

S2101: sending first information

(e.g., indication information)

S2102: determining a
first transmission power

S2103: sending the SRSs or SRS
sets

Fig.2

S3101: obtaining first information (e.g., indication information)

↓

S3102: determining a first transmission power

↓

S3103: sending the SRSs or SRS sets

Fig.3a

S3201: obtaining first information (e.g., indication information)

↓

S3202: determining at least two SRSs or at least two SRS sets for bandwidth aggregation for positioning measurement

Fig.3b

S3301: sending each of the at least two SRSs or each of the at least two SRS sets

Fig.3c

S3401: receiving first information

↓

S3402: sending each of the at least two SRSs or each of the at least two SRS sets

Fig.3d

S4101: sending first information

S4102: receiving the SRSs or SRS sets

Fig.4a

S4201: sending first information

S4202: receiving each of the at least two SRSs or each of the at least two SRS sets.

Fig.4b

Network device 102

Terminal 101

S5101: sending first information
(e.g., indication information)

S5102: sending each of the at least two SRSs
or each of the at least two SRS sets to the
network device

Fig.5

6100

Receiving module 6101

Sending module 6102

Fig.6a

6200

Sending module 6201

Receiving module 6202

Fig.6b

Fig.7

Fig.8

## INTERNATIONAL SEARCH REPORT

| International application No. |
|---|
| **PCT/CN2023/087158** |

### A. CLASSIFICATION OF SUBJECT MATTER

H04W52/00(2009.01)i

According to International Patent Classification (IPC) or to both national classification and IPC

### B. FIELDS SEARCHED

Minimum documentation searched (classification system followed by classification symbols)

IPC: H04W H04L

Documentation searched other than minimum documentation to the extent that such documents are included in the fields searched

Electronic data base consulted during the international search (name of data base and, where practicable, search terms used)

CNTXT, ENTXT, ENTXTC, VEN, 3GPP, CNKI, IEEE: 探测参考信号, 聚合, 带宽, 定位, 位置, 指示, 配置, 功率, 发送, 发射, 传输, 载波, 数目, 数量, sounding reference signal, SRS, aggregat+, bandwidth, BW, position, locat+, indicat+, configur+, power, transmit+, send+, carrier?, number

### C. DOCUMENTS CONSIDERED TO BE RELEVANT

| Category* | Citation of document, with indication, where appropriate, of the relevant passages | Relevant to claim No. |
|---|---|---|
| X | CN 114765728 A (VIVO COMMUNICATION TECHNOLOGY CO., LTD.) 19 July 2022 (2022-07-19) description, paragraphs [0041]-[0113] and [0525]-[0588] | 1-30 |
| A | CN 114727221 A (HUAWEI TECHNOLOGIES CO., LTD.) 08 July 2022 (2022-07-08) entire document | 1-30 |
| A | CN 114765489 A (VIVO COMMUNICATION TECHNOLOGY CO., LTD.) 19 July 2022 (2022-07-19) entire document | 1-30 |
| A | US 2018006788 A1 (LG ELECTRONICS INC.) 04 January 2018 (2018-01-04) entire document | 1-30 |
| A | HUAWEI et al. "Signalings and procedures to support PRS or SRS BW aggregation" *3GPP TSG-RAN WG1 Meeting #112, R1-2300084*, 17 February 2023 (2023-02-17), section 3 | 1-30 |

☑ Further documents are listed in the continuation of Box C.   ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **20 November 2023** | **08 December 2023** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
|---|
| **PCT/CN2023/087158** |

**C.    DOCUMENTS CONSIDERED TO BE RELEVANT**

| Category* | Citation of document, with indication, where appropriate, of the relevant passages | Relevant to claim No. |
|---|---|---|
| A | LTE. "Summary #2 for PRS and SRS BW aggregation"<br>*3GPP TSG RAN WG1 #112, R1-2300809*, 28 February 2023 (2023-02-28),<br>section 3 | 1-30 |

Form PCT/ISA/210 (second sheet) (July 2022)

| INTERNATIONAL SEARCH REPORT | | International application No. |
| --- | --- | --- |
| Information on patent family members | | **PCT/CN2023/087158** |

| Patent document cited in search report | | | Publication date (day/month/year) | Patent family member(s) | | | Publication date (day/month/year) |
| --- | --- | --- | --- | --- | --- | --- | --- |
| CN | 114765728 | A | 19 July 2022 | WO | 2022143492A | A1 | 07 July 2022 |
| CN | 114727221 | A | 08 July 2022 | None | | | |
| CN | 114765489 | A | 19 July 2022 | WO | 2022143493 | A1 | 07 July 2022 |
| US | 2018006788 | A1 | 04 January 2018 | CA | 2974656 | A1 | 28 July 2016 |
| | | | | US | 10355843 | B2 | 16 July 2019 |
| | | | | WO | 2016117974 | A1 | 28 July 2016 |

Form PCT/ISA/210 (patent family annex) (July 2022)